# EUROPEAN PATENT APPLICATION

(11) **EP 4 815 323 A1**
(43) Date of publication of application: **30.09.2026**
(21) Application number: 23959106.8
(22) Date of filing: 20.11.2023
(51) Int. Cl.: H04B 7/06

(54) **CHANNEL STATE INFORMATION FEEDBACK METHOD AND APPARATUS, AND STORAGE MEDIUM**

(71) Applicant: Beijing Xiaomi Mobile Software Co., Ltd., Beijing 100085 (CN)
(72) Inventor: LIU, Zhengxuan, Beijing 100085 (CN)
(74) Representative: Stöckeler, Ferdinand
(86) International application number: PCT/CN2023/132760
(87) International publication number: WO 2025/107131

(57) **Abstract**

The present disclosure relates to a channel state information feedback method and apparatus, and a storage medium. The method comprises: sending first information, wherein the first information is used for indicating at least one of the following: a first spatial-domain basis vector of a horizontal dimension, and a second spatial-domain basis vector of a vertical dimension. By means of the solution of the present disclosure, the indication overhead of spatial-domain basis vectors is reduced.

## Description

### TECHNICAL FIELD

The disclosure relates to the field of wireless communication technologies, and more particularly to a method and apparatus for channel status information (CSI) feedback, and a storage medium.

### BACKGROUND

With the development of wireless communication technologies, larger-scale antennas or adds more antenna ports are often deployed at a network side. In a multiple-input-multiple-output (MIMO) system, in order to improve a signal transmission performance and a system capacity, a network device needs to determine an optimal precoding vector based on channel status information (CSI) fed back by a terminal, and then perform precoding on downlink data. The terminal feeds back a precoding matrix indicator (PMI) to the network device via the CSI, enabling the network device to obtain a downlink precoding matrix. The PMI fed back by the terminal includes indication information of a spatial domain (SD) basis, to indicate the SD basis selected by the terminal to the network device.

### SUMMARY

An indication overhead of a spatial domain (SD) basis may increase significantly in a case where a quantity of antenna ports is large.

Embodiments of the disclosure provide a method and apparatus for channel status information (CSI) feedback, and a storage medium.

According to a first aspect of embodiments of the disclosure, a method for CSI feedback is provided, which is executed by a terminal and includes: sending first information, in which the first information is used to indicate at least one of: one or more first SD bases in a horizontal dimension; or one or more second SD bases in a vertical dimension.

According to a second aspect of embodiments of the disclosure, a method for CSI feedback is provided, which is executed by a network device. The method includes: receiving first information, in which the first information is used to indicate at least one of: one or more first SD bases in a horizontal dimension; or one or more second SD bases in a vertical dimension.

According to a third aspect of embodiments of the disclosure, a method for CSI feedback is provided, which is executed by a communication device. The method includes: sending, by a terminal, first information to a network device, in which the first information is used to indicate at least one of: one or more first SD bases in a horizontal dimension; or one or more second SD bases in a vertical dimension.

According to a fourth aspect of embodiments of the disclosure, a terminal is provided, which includes: a transceiver module, configured to send first information, in which the first information is used to indicate at least one of: one or more first SD bases in a horizontal dimension; or one or more second SD bases in a vertical dimension.

According to a fifth aspect of embodiments of the disclosure, a network device is provided, which includes: a transceiver module, configured to receive first information, in which the first information is used to indicate at least one of: one or more first SD bases in a horizontal dimension; or one or more second SD bases in a vertical dimension.

According to a sixth aspect of embodiments of the disclosure, a communication device is provided. The above communication device includes: one or more processors; and one or more memories configured to store instructions; and the processor is configured to invoke instructions to cause the communication device to perform the method according to any one of the first aspect or the second aspect.

According to a seventh aspect of embodiments of the disclosure, a communication system is provided, which includes: a terminal and a network device. The terminal is configured to perform the method according to the first aspect; and the network device is configured to perform the method according to the second aspect.

According to an eighth aspect of embodiments of the disclosure, a storage medium (which may also be described as a computer storage medium) is provided. The storage medium has stored thereon instructions. When the instructions are executed by a processor, the method according to the first aspect or the second aspect is executed.

According to a ninth aspect of embodiments of the disclosure, a computer program or computer program product is provided. The computer program or computer program product includes codes. When the instructions are executed by a processor, the method according to the first aspect or the second aspect is executed.

With the technical solution provided in embodiments of the disclosure, an indication overhead of SD bases is reduced.

It should be understood that both the foregoing general description and the following detailed description are illustrative and explanatory only and are do not constitute a limitation on embodiments of the disclosure.

### BRIEF DESCRIPTION OF THE DRAWINGS

To more clearly illustrate the technical solution in embodiments of the disclosure, accompanying drawings used for the description of embodiments are introduced below. The accompanying drawings below are only some embodiments of the disclosure and do not impose detailed limitations on the protection scope of the disclosure.
FIG. 1 is a schematic diagram illustrating an architecture of a communication system according to an embodiment of the disclosure.
FIG. 2A is a first flow chart illustrating a method for channel status information (CSI) feedback according to an embodiment of the disclosure.
FIG. 2B is a second flow chart illustrating a method for CSI feedback according to an embodiment of the disclosure.
FIG. 2C is a third flow chart illustrating a method for CSI feedback according to an embodiment of the disclosure.
FIG. 2D is a fourth flow chart illustrating a method for CSI feedback according to an embodiment of the disclosure.
FIG. 3A is a first flow chart providing a method for CSI feedback executed by a terminal side according to an embodiment of the disclosure.
FIG. 3B is a second flow chart providing a method for CSI feedback executed by a terminal side according to an embodiment of the disclosure.
FIG. 4A is a first flow chart illustrating a method for CSI feedback executed by a network device side according to an embodiment of the disclosure.
FIG. 4B is a second flow chart illustrating a method for CSI feedback executed by a network device side according to an embodiment of the disclosure.
FIG. 5A is a third flow chart illustrating a method for CSI feedback executed by a terminal side according to an embodiment of the disclosure.
FIG. 5B is a third flow chart illustrating a method for CSI feedback executed by a network device side according to an embodiment of the disclosure.
FIG. 6A is a fourth flow chart illustrating a method for CSI feedback executed by a terminal side according to an embodiment of the disclosure.
FIG. 6B is a fourth flow chart illustrating a method for CSI feedback executed by a network device side according to an embodiment of the disclosure.
FIG. 7A is a block diagram illustrating a terminal according to an embodiment of the disclosure.
FIG. 7B is a block diagram illustrating a network device according to an embodiment of the disclosure.
FIG. 8A is a block diagram illustrating a communication device according to an embodiment of the disclosure.
FIG. 8B is a block diagram illustrating a chip according to an embodiment of the disclosure.

### DETAILED DESCRIPTION

Embodiments of the disclosure provide a method and apparatus for channel status information (CSI) feedback, and a storage medium.

In a first aspect, embodiments of the disclosure provide a method for CSI feedback, which is executed by a terminal. The method includes: sending first information, and the first information is used to indicate at least one of: one or more first spatial domain (SD) bases in a horizontal dimension; or one or more second SD bases in a vertical dimension.

In embodiments of the disclosure, the terminal sends the first information to a network device, indicating at least one of one or more SD bases in the horizontal dimension or one or more SD bases in the vertical dimension selected by itself. Since the one or more SD bases in the horizontal dimension and the one or more SD bases in the vertical dimension are indicated separately, fewer bits may be used, thus reducing an indication overhead of SD bases. In addition, in a case that the terminal only feeds back at least one of the one or more SD bases in the horizontal dimension or the one or more SD bases in the vertical dimension to the network device, the indication overhead of the SD bases is further reduced because a quantity of parameters fed is reduced.

In combination with some embodiments of the first aspect, in some possible embodiments, the one or more first SD bases are indicated by a first field of the first information.

In combination with some embodiments of the first aspect, in some possible embodiments, a bit value of the first field is determined based on a quantity of antenna ports in the horizontal dimension and a quantity of the one or more first SD bases.

In combination with some embodiments of the first aspect, in some possible embodiments, a bit value of the first field is calculated based on an expression (1).

In combination with some embodiments of the first aspect, in some possible embodiments, the one or more second SD bases are indicated by a second field of the first information.

In combination with some embodiments of the first aspect, in some possible embodiments, a bit value of the second field is determined based on a quantity of antenna ports in the vertical dimension and a quantity of the one or more second SD bases.

In combination with some embodiments of the first aspect, in some possible embodiments, a bit value of the second field is calculated based on an expression (2).

In combination with some embodiments of the first aspect, in some possible embodiments, the above method also includes: sending second information, and the second information is used to indicate at least one of: a first orthogonal SD basis group in the horizontal dimension, or a second orthogonal SD basis group in the vertical dimension.

In embodiments of the disclosure, the terminal sends the second information to the network device, indicating at least one of the first orthogonal SD basis group in the horizontal dimension or the second orthogonal SD basis group in the vertical dimension selected by itself. Since the SD basis group in the horizontal dimension and the SD basis group in the vertical dimension are indicated separately, fewer bits may be used, thus further reducing the indication overhead of the SD bases.

In combination with some embodiments of the first aspect, in some possible embodiments, the above method also includes: receiving third information, and the third information is used to indicate a quantity of one or more SD bases, and the quantity of the one or more SD bases is used to determine at least one of the one or more first SD bases or the one or more second SD bases.

In combination with some embodiments of the first aspect, in some possible embodiments, the quantity of the one or more SD bases includes at least one of: a quantity of one or more SD bases in the horizontal dimension; or a quantity of one or more SD bases in the vertical dimension.

In embodiments of the disclosure, the network device configures at least one of the quantity of one or more SD bases in the horizontal dimension or the quantity of one or more SD bases in the vertical dimension for the terminal, such that the terminal may feed back at least one of the one or more SD bases in the horizontal dimension or the one or more SD bases in the vertical dimension based on the configured quantity of the one or more SD bases in the horizontal dimension and/or the configured quantity of the one or more SD bases in the vertical dimension. Since the one or more SD bases in the horizontal dimension and the one or more SD bases in the vertical dimension are indicated separately, fewer bits may be used, thus reducing the indication overhead of the SD bases. In addition, the indication overhead of the SD bases may be further reduced by reducing the quantity of parameters fed back.

In combination with some embodiments of the first aspect, in some possible embodiments, the quantity of the one or more SD bases includes a total quantity of the one or more SD bases, and the total quantity of the one or more SD bases is equal to a product of a quantity of one or more SD bases in the horizontal dimension and a quantity of one or more SD bases in the vertical dimension.

In embodiments of the disclosure, the network device configures the total quantity of the one or more SD bases for the terminal. The total quantity of the one or more SD bases is equal to the product of the quantity of the one or more SD bases in the horizontal dimension and the quantity of the one or more SD bases in the vertical dimension, such that the terminal may determine at least one of the one or more SD bases in the horizontal dimension or the one or more SD bases in the vertical dimension based on the total quantity of the one or more SD bases and provide feedback, which may use fewer bits, thus reducing the indication overhead of SD bases.

In combination with some embodiments of the first aspect, in some possible embodiments, the above method also includes: sending fourth information, and the fourth information is used to indicate at least one of: the quantity of the one or more first SD bases; or the quantity of the one or more second SD bases.

In combination with some embodiments of the first aspect, in some possible embodiments, the quantity of the one or more first SD bases is indicated by a third field of the fourth information.

In combination with some embodiments of the first aspect, in some possible embodiments, a bit value of the third field is determined by at least one of: the quantity of one or more SD bases; the quantity of antenna ports in the horizontal dimension; or a first preset value.

In combination with some embodiments of the first aspect, in some possible embodiments, the quantity of the one or more second SD bases is indicated by a fourth field of the fourth information.

In combination with some embodiments of the first aspect, in some possible embodiments, a bit value of the fourth field is determined by at least one of: the quantity of one or more SD bases; the quantity of antenna ports in the vertical dimension; or a second preset value.

In combination with some embodiments of the first aspect, in some possible embodiments, the above method also includes: receiving fifth information, and the fifth information includes at least one of: the quantity of antenna ports in the horizontal dimension; the quantity of antenna ports in the vertical dimension; an oversampling factor in the horizontal dimension; or an oversampling factor in the vertical dimension.

In a second aspect, embodiments of the disclosure provide a method for CSI feedback, which is executed by a network device. The above method includes: receiving first information, and the first information is used to indicate at least one of: one or more first SD bases in a horizontal dimension; or one or more second SD bases in a vertical dimension.

In combination with some embodiments of the second aspect, in some possible embodiments, the one or more first SD bases are indicated by a first field of the first information.

In combination with some embodiments of the second aspect, in some possible embodiments, a bit value of the first field is determined based on a quantity of antenna ports in the horizontal dimension and a quantity of the one or more first SD bases.

In combination with some embodiments of the second aspect, in some possible embodiments, a bit value of the first field is calculated based on an expression (1).

In combination with some embodiments of the second aspect, in some possible embodiments, the one or more second SD bases are indicated by a second field of the first information.

In combination with some embodiments of the second aspect, in some possible embodiments, a bit value of the second field is determined based on a quantity of antenna ports in the vertical dimension and a quantity of the one or more second SD bases.

In combination with some embodiments of the second aspect, in some possible embodiments, a bit value of the second field is calculated based on an expression (2).

In combination with some embodiments of the second aspect, in some possible embodiments, the above method also includes: receiving second information, and the second information is used to indicate at least one of: a first orthogonal SD basis group in the horizontal dimension; or a second orthogonal SD basis group in the vertical dimension.

In combination with some embodiments of the second aspect, in some possible embodiments, the above method also includes: sending third information, and the third information is used to indicate a quantity of one or more SD bases, and the quantity of the one or more SD bases is used to determine at least one of the one or more first SD bases or the one or more second SD bases.

In combination with some embodiments of the second aspect, in some possible embodiments, the quantity of the one or more SD bases includes at least one of: a quantity of SD bases in the horizontal dimension; or a quantity of SD bases in the vertical dimension.

In combination with some embodiments of the second aspect, in some possible embodiments, the quantity of the one or more SD bases includes a total quantity of the one or more SD bases, and the total quantity of SD bases is equal to a product of a quantity of one or more SD bases in the horizontal dimension and a quantity of one or more SD bases in the vertical dimension.

In combination with some embodiments of the second aspect, in some possible embodiments, the above method also includes: receiving fourth information, and the fourth information is used to indicate at least one of: the quantity of the one or more first SD bases; or the quantity of the one or more second SD bases.

In combination with some embodiments of the second aspect, in some possible embodiments, the quantity of the one or more first SD bases is indicated by a third field of the fourth information.

In combination with some embodiments of the second aspect, in some possible embodiments, a bit value of the third field is determined by at least one of: the quantity of the one or more SD bases; the quantity of antenna ports in the horizontal dimension; or a first preset value.

In combination with some embodiments of the second aspect, in some possible embodiments, the quantity of the one or more second SD bases is indicated by a fourth field of the fourth information.

In combination with some embodiments of the second aspect, in some possible embodiments, a bit value of the fourth field is determined by at least one of: the quantity of the one or more SD bases; the quantity of antenna ports in the vertical dimension; or a second preset value.

In combination with some embodiments of the second aspect, in some possible embodiments, the above method also includes: sending fifth information, and the fifth information includes at least one of: the quantity of antenna ports in the horizontal dimension; the quantity of antenna ports in the vertical dimension; an oversampling factor in the horizontal dimension; or an oversampling factor in the vertical dimension.

In a third aspect, embodiments of the disclosure provide a method for CSI feedback, which is executed by a communication system. The above method includes: sending, by a terminal, first information to a network device, and the first information is used to indicate at least one of: one or more first SD bases in a horizontal dimension; or one or more second SD bases in a vertical dimension.

In combination with some embodiments of the third aspect, in some possible embodiments, the one or more first SD bases are indicated by a first field of the first information.

In combination with some embodiments of the third aspect, in some possible embodiments, a bit value of the first field is determined based on a quantity of antenna ports in the horizontal dimension and a quantity of the one or more first SD bases.

In combination with some embodiments of the third aspect, in some possible embodiments, a bit value of the first field is calculated based on an expression (1).

In combination with some embodiments of the third aspect, in some possible embodiments, the one or more second SD bases are indicated by a second field of the first information.

In combination with some embodiments of the third aspect, in some possible embodiments, a bit value of the second field is determined based on a quantity of antenna ports in the vertical dimension and a quantity of the one or more second SD bases.

In combination with some embodiments of the third aspect, in some possible embodiments, a bit value of the second field is calculated based on an expression (2).

In combination with some embodiments of the third aspect, in some possible embodiments, the above method also includes: sending, by the terminal, second information to the network device, and the second information is used to indicate at least one of: a first orthogonal SD basis group in the horizontal dimension; or a second orthogonal SD basis group in the vertical dimension.

In combination with some embodiments of the third aspect, in some possible embodiments, the above method also includes: sending by the network device, third information to the terminal, and the third information is used to indicate a quantity of one or more SD bases, and the quantity of the one or more SD bases is used to determine at least one of the one or more first SD bases or the one or more second SD bases.

In combination with some embodiments of the third aspect, in some possible embodiments, the quantity of the one or more SD bases includes at least one of: a quantity of one or more SD bases in the horizontal dimension; or a quantity of one or more SD bases in the vertical dimension.

In combination with some embodiments of the third aspect, in some possible embodiments, the quantity of the one or more SD bases includes a total quantity of the one or more SD bases, and the total quantity of the one or more SD bases is equal to a product of a quantity of one or more SD bases in the horizontal dimension and a quantity of one or more SD bases in the vertical dimension.

In combination with some embodiments of the third aspect, in some possible embodiments, the above method also includes: sending, by the terminal, fourth information to the network device, and the fourth information is used to indicate at least one of: the quantity of the one or more first SD bases; or the quantity of the one or more second SD bases.

In combination with some embodiments of the third aspect, in some possible embodiments, the quantity of the one or more first SD bases is indicated by a third field of the fourth information.

In combination with some embodiments of the third aspect, in some possible embodiments, a bit value of the third field is determined by at least one of: the quantity of the one or more SD bases; the quantity of antenna ports in the horizontal dimension; or a first preset value.

In combination with some embodiments of the third aspect, in some possible embodiments, the quantity of the one or more second SD bases is indicated by a fourth field of the fourth information.

In combination with some embodiments of the third aspect, in some possible embodiments, a bit value of the fourth field is determined by at least one of: the quantity of the one or more SD bases; the quantity of antenna ports in the vertical dimension; or a second preset value.

In combination with some embodiments of the third aspect, in some possible embodiments, the above method also includes: receiving fifth information, and the fifth information includes at least one of: the quantity of antenna ports in the horizontal dimension; the quantity of antenna ports in the vertical dimension; an oversampling factor in the horizontal dimension; or an oversampling factor in the vertical dimension.

In a fourth aspect, embodiments of the disclosure provide a terminal. The above terminal includes: a transceiver module, configured to send first information, and the first information is used to indicate at least one of: one or more first SD bases in a horizontal dimension; or one or more second SD bases in a vertical dimension.

In combination with some embodiments of the fourth aspect, in some possible embodiments, the one or more first SD bases are indicated by a first field of the first information.

In combination with some embodiments of the fourth aspect, in some possible embodiments, a bit value of the first field is determined based on a quantity of antenna ports in the horizontal dimension and a quantity of the one or more first SD bases.

In combination with some embodiments of the fourth aspect, in some possible embodiments, a bit value of the first field is calculated based on an expression (1).

In combination with some embodiments of the fourth aspect, in some possible embodiments, the one or more second SD bases are indicated by a second field of the first information.

In combination with some embodiments of the fourth aspect, in some possible embodiments, a bit value of the second field is determined based on a quantity of antenna ports in the vertical dimension and a quantity of the one or more second SD bases.

In combination with some embodiments of the fourth aspect, in some possible embodiments, a bit value of the second field is calculated based on an expression (2).

In combination with some embodiments of the fourth aspect, in some possible embodiments, the transceiver module is further configured to send second information, and the second information is used to indicate at least one of: a first orthogonal SD basis group in the horizontal dimension; or a second orthogonal SD basis group in the vertical dimension.

In combination with some embodiments of the fourth aspect, in some possible embodiments, the transceiver module is also configured to receive third information, and the third information is used to indicate a quantity of one or more SD bases, and the quantity of the one or more SD bases is used to determine at least one of the one or more first SD bases or the one or more second SD bases.

In combination with some embodiments of the fourth aspect, in some possible embodiments, the quantity of SD bases includes at least one of: a quantity of one or more SD bases in the horizontal dimension; or a quantity of one or more SD bases in the vertical dimension.

In combination with some embodiments of the fourth aspect, in some possible embodiments, the quantity of the one or more SD bases includes a total quantity of the one or more SD bases, and the total quantity of the one or more SD bases is equal to a product of a quantity of one or more SD bases in the horizontal dimension and a quantity of one or more SD bases in the vertical dimension.

In combination with some embodiments of the fourth aspect, in some possible embodiments, the transceiver module is also configured to send fourth information, and the fourth information is used to indicate at least one of: the quantity of the one or more first SD bases; or the quantity of the one or more second SD bases.

In combination with some embodiments of the fourth aspect, in some possible embodiments, the quantity of the one or more first SD bases is indicated by a third field of the fourth information.

In combination with some embodiments of the fourth aspect, in some possible embodiments, a bit value of the third field is determined by at least one of: the quantity of the one or more SD bases; the quantity of antenna ports in the horizontal dimension; or a first preset value.

In combination with some embodiments of the fourth aspect, in some possible embodiments, the quantity of the one or more second SD bases is indicated by a fourth field of the fourth information.

In combination with some embodiments of the fourth aspect, in some possible embodiments, a bit value of the fourth field is determined by at least one of: the quantity of the one or more SD bases; the quantity of antenna ports in the vertical dimension; or a second preset value.

In combination with some embodiments of the fourth aspect, in some possible embodiments, the transceiver module is also configured to receive fifth information, and the fifth information includes at least one of: the quantity of antenna ports in the horizontal dimension; the quantity of antenna ports in the vertical dimension; an oversampling factor in the horizontal dimension; or an oversampling factor in the vertical dimension.

In a fifth aspect, embodiments of the disclosure provide a network device. The above network device includes: a transceiver module configured to receive first information, and the first information is used to indicate at least one of: one or more first SD bases in a horizontal dimension; or one or more second SD bases in a vertical dimension.

In combination with some embodiments of the fifth aspect, in some possible embodiments, the one or more first SD bases are indicated by a first field of the first information.

In combination with some embodiments of the fifth aspect, in some possible embodiments, a bit value of the first field is determined based on a quantity of antenna ports in the horizontal dimension and a quantity of the one or more first SD bases.

In combination with some embodiments of the fifth aspect, in some possible embodiments, a bit value of the first field is calculated based on an expression (1).

In combination with some embodiments of the fifth aspect, in some possible embodiments, the one or more second SD bases are indicated by a second field of the first information.

In combination with some embodiments of the fifth aspect, in some possible embodiments, a bit value of the second field is determined based on a quantity of antenna ports in the vertical dimension and a quantity of the one or more second SD bases.

In combination with some embodiments of the fifth aspect, in some possible embodiments, a bit value of the second field is calculated based on an expression (2).

In combination with some embodiments of the fifth aspect, in some possible embodiments, the transceiver module is also configured to receive second information, and the second information is used to indicate at least one of: a first orthogonal SD basis group in the horizontal dimension; or a second orthogonal SD basis group in the vertical dimension.

In combination with some embodiments of the fifth aspect, in some possible embodiments, the transceiver module is also configured to send third information, and the third information is used to indicate a quantity of one or more SD bases, and the quantity of the one or more SD bases is used to determine at least one of the one or more first SD bases or the one or more second SD bases.

In combination with some embodiments of the fifth aspect, in some possible embodiments, the quantity of the one or more SD bases includes at least one of: a quantity of one or more SD bases in the horizontal dimension; or a quantity of one or more SD bases in the vertical dimension.

In combination with some embodiments of the fifth aspect, in some possible embodiments, the quantity of the one or more SD bases includes a total quantity of the one or more SD bases, and the total quantity of the one or more SD bases is equal to a product of a quantity of one or more SD bases in the horizontal dimension and a quantity of one or more SD bases in the vertical dimension.

In combination with some embodiments of the fifth aspect, in some possible embodiments, the transceiver module is also configured to receive fourth information, and the fourth information is used to indicate at least one of: the quantity of the one or more first SD bases; or the quantity of the one or more second SD bases.

In combination with some embodiments of the fifth aspect, in some possible embodiments, the quantity of the one or more first SD bases is indicated by a third field of the fourth information.

In combination with some embodiments of the fifth aspect, in some possible embodiments, a bit value of the third field is determined by at least one of: the quantity of the one or more SD bases; the quantity of antenna ports in the horizontal dimension; or a first preset value.

In combination with some embodiments of the fifth aspect, in some possible embodiments, the quantity of the one or more second SD bases is indicated by a fourth field of the fourth information.

In combination with some embodiments of the fifth aspect, in some possible embodiments, a bit value of the fourth field is determined by at least one of: the quantity of the one or more SD bases; the quantity of antenna ports in the vertical dimension; or a second preset value.

In combination with some embodiments of the fifth aspect, in some possible embodiments, the transceiver module is also configured to send fifth information, and the fifth information includes at least one of: the quantity of antenna ports in the horizontal dimension; the quantity of antenna ports in the vertical dimension; an oversampling factor in the horizontal dimension; or an oversampling factor in the vertical dimension.

In a sixth aspect, embodiments of the disclosure provide a communication device. The above communication device includes: one or more processors; and one or more memories for storing instructions. The one or more processors are configured to call the instructions to cause the communication device to execute the method of any one of the first aspect, the second aspect, and embodiments of the first aspect and the second aspect.

In a seventh aspect, embodiments of the disclosure provide a communication system. The above communication system includes a terminal and a network device. The terminal is configured to execute the method of any one of the first aspect and embodiments of the first aspect, and the network device is configured to execute the method of any one of the second aspect and embodiments of the second aspect.

In an eighth aspect, embodiments of the disclosure provide a storage medium for storing instructions. When the instructions are run on a communication device, the communication device is caused to execute a method of any one of the first aspect, the second aspect, and embodiments of the first aspect and the second aspect.

In a ninth aspect, embodiments of the disclosure provide a computer program product. When the computer program product is executed by a communication device, the communication device is caused to execute the method of any one of the first aspect, the second aspect, and embodiments of the first aspect and the second aspect.

In a tenth aspect, embodiments of the disclosure provide a computer program. When the computer program is run on a communication device, a computer is caused to execute the method of any one of the first aspect, the second aspect, and embodiments of the first aspect and the second aspect.

It may be understood that all the terminal, the network device, the communication device, the storage medium, the computer program product, and the computer program are configured to execute the method in the embodiments of the disclosure. Therefore, for beneficial effects they may achieve, please refer to the beneficial effects in the corresponding method, which is not repeated here.

Embodiments of the disclosure provide a method and apparatus for CSI feedback, and a storage medium. In some possible embodiments, the terms such as method for CSI feedback, method for reporting CSI, method for sending CSI, communication method, and information processing method may be used interchangeably. The terms such as terminal, network device, communication apparatus, and information processing apparatus may be used interchangeably. The terms such as communication system and information processing system may be used interchangeably.

Embodiments of the disclosure are not exhaustive, but are only illustrative, and are not intended to be a detailed limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, alternative implementations in a certain embodiment may be arbitrarily combined. In addition, respective embodiments may be arbitrarily combined, for example, some or all steps of different embodiments may be arbitrarily combined, and for another example, a certain embodiment may be arbitrarily combined with alternative implementations of other embodiments.

In various embodiments of the disclosure, unless otherwise specified or there is a logical conflict, the terms and/or descriptions between the embodiments are consistent and reference to each other may be made, and the technical features in different embodiments may be combined to form a new embodiment based on internal logical relationships of the technical features.

The terms used in embodiments of the disclosure are only for the purpose of describing specific embodiments and are not intended to limit the disclosure.

In the embodiments of the disclosure, unless otherwise specified, elements expressed in the singular form, such as "a", "an", "the", "above", "said", "aforementioned", "this", etc., may mean "one and only one", or "one or more", "at least one", etc. For example, when articles such as "a", "an", "the" in English translation are used, the noun after the article may be understood as a singular expression or a plural expression.

In the embodiments of the disclosure, "a plurality of" means two or more.

In some possible embodiments, the terms such as "at least one of", "one or more", "a plurality of", "multiple", etc. may be used interchangeably.

In some possible embodiments, the terms such as "at least one of A, B", "A and/or B", "in one case, A; in another case, B", "in response to one case, A; in response to another case, B", etc. may include the following technical solutions according to situations: in some possible embodiments, A (A is executed independently of B); in some possible embodiments, B (B is executed independently of A); in some possible embodiments, one is selected from A and B to be executed (A and B are selectively executed); and in some possible embodiments, A and B (both A and B are executed). When there are more branches such as A, B, C, etc., the above is applicable.

In some possible embodiments, the descriptions such as "A or B", etc. may include the following technical solutions according to situations: in some possible embodiments, A (A is executed independently of B); in some possible embodiments, B (B is executed independently of A); in some possible embodiments, one is selected from A and B to be executed (A and B are selectively executed). When there are more branches such as A, B, C, etc., the above is applicable.

The prefixes such as "first" and "second" in the embodiments of the disclosure are only used to distinguish different descriptive objects, and do not constitute restrictions on the position, order, priority, quantity or content of the descriptive objects. For the statement of the descriptive objects, please refer to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some possible embodiments, "including A", "containing A", "used to indicate/indicating A", and "carrying A" may be interpreted as directly carrying A or indirectly indicating A.

In some possible embodiments, the terms such as "in response to...", "in response to determining...", "in the case of/that...", "at the time of...", "when...", "if...", "in case of/that...", etc. may be used interchangeably.

In some possible embodiments, the terms such as "greater than", "greater than or equal to", "not smaller than", "more than", "more than or equal to", "not less than", "higher than", "higher than or equal to", "not lower than", and "above" may be replaced with each other, and the terms such as "smaller than", "smaller than or equal to", "not greater than", "less than", "less than or equal to", "no more than", "lower than", "lower than or equal to", "not higher than", and "below" may be used interchangeably.

In some possible embodiments, the apparatus, etc. may be interpreted as physical or virtual, and their names are not limited to the names recorded in the embodiments. In some case, the terms such as "apparatus", "equipment", "device", "circuit", "network element", "node", "function", "unit", "section", "system", "network", "chip", "chip system", "entity", and "subject" may be used interchangeably.

In some possible embodiments, "network" may be interpreted as a device included in a network, such as, an access network device, a core network device, etc.

In some possible embodiments, the terms such as "access network device (AN device)", "radio access network (RAN) device", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femtocell", "picocell", "sector", "cell group", "serving cell", "carrier", "component carrier", "bandwidth part (BWP)" may be used interchangeably.

In some possible embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" may be used interchangeably.

In some possible embodiments, the access network device, the core network device, or the network device may be replaced with the terminal. For example, the structure where communication between access network devices, core network devices, or network devices and terminals is replaced with communication between multiple terminals (e.g., device-to-device (D2D), vehicle-to-everything (V2X), etc.) may also be applied to various embodiments of the disclosure. In this case, the terminal may also be configured to have all or some of the functions of the access network device. In addition, the terms such as "uplink" and "downlink" may be replaced with the terms (e.g., "sidelink") corresponding to the communication between terminals. For example, uplink channels or downlink channels may be replaced with side channels, and uplink links or downlink links may be replaced with side links. Side links may also be replaced with sidelinks.

In some possible embodiments, the terminal may be replaced with the access network device, the core network device, or the network device. In this case, the access network device, the core network device, or the network device may also be configured with all or some of the functions of the terminal.

In some possible embodiments, obtaining data, information, etc. shall comply with laws and regulations of a country where it is located.

In some possible embodiments, data, information, etc. may be obtained after agreed by a user.

In addition, each element, each row, or each column in tables of embodiments of the disclosure may be implemented as an independent embodiment. Any combination of elements, rows, or columns may also be implemented as an independent embodiment.

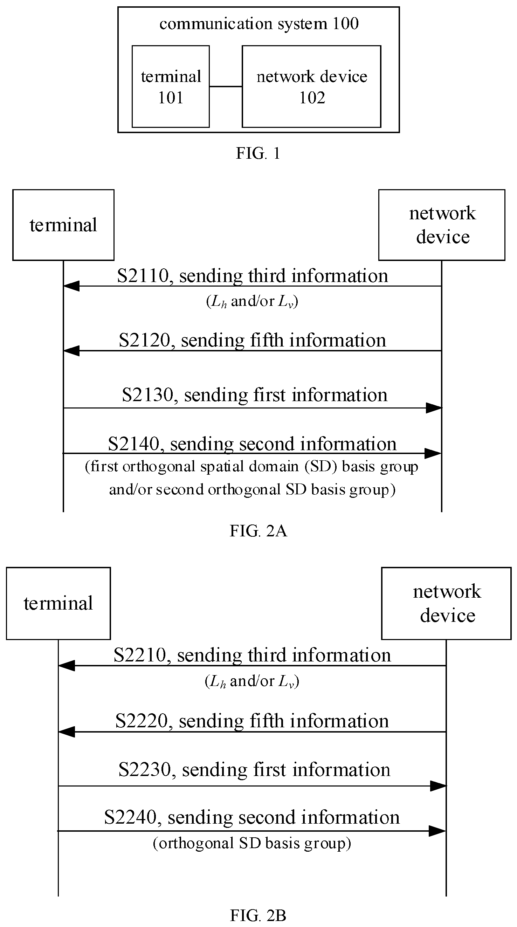

FIG. 1 is a schematic diagram illustrating an architecture of a communication system according to an embodiment of the disclosure.

As illustrated in FIG. 1, the communication system 100 includes a terminal 101 and a network device 102. The network device 102 may be an access network device.

In some possible embodiments, the terminal 101 includes, such as, at least one of a mobile phone, a wearable device, an Internet of Things device, or a car, a smart car, and a Pad with a communication function, a computer with a wireless transceiver function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited herein.

In some possible embodiments, the access network device is, such as, a node or device that connects the terminal to a wireless network. The access network device may include at least one of an evolved nodeB (eNB) in a 5G communication system, a next generation eNB (ng-eNB), a next generation nodeB (gNB), a node B (NB), a home nodeB (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited herein.

In some possible embodiments, the technical solution of the disclosure may be applied to an Open RAN architecture. In this case, an interface between or within access network devices involved in the embodiments of the disclosure may be transformed into an internal interface of Open RAN. The processes and information interactions between these internal interfaces may be implemented via software or program.

In some possible embodiments, the access network device may be combined by a central unit (CU) and a distributed unit (DU). The CU may also be called a control unit. By employing a CU-DU structure, a protocol layer of the access network device may be separated. Some of protocol layer functions are centrally controlled by the CU, and the remaining part or all of protocol layer functions are distributed in the DU, which is centrally controlled by the CU, but is not limited herein.

It may be understood that the communication system in the embodiments of the disclosure is for more clearly illustrating the technical solutions in the embodiments of the disclosure and does not constitute a limitation on the technical solutions in the embodiments of the disclosure. Those skilled in the art may understand that, with the evolution of system architectures and the emergence of new service scenarios, the technical solutions in the embodiments of the disclosure are also applicable to similar technical problems.

The following embodiments of the disclosure may be applied to the communication system 100 or some subjects of the communication system 100 illustrated in FIG. 1, but are not limited herein. The subjects illustrated in FIG. 1 are examples, and the communication system 100 may include all or some of the subjects in FIG. 1, or may include other subjects than those illustrated in FIG. 1. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

The embodiments of the disclosure may be applied to long term evolution (LTE), LTE-advanced (LTE-A), LTE-beyond (LTE-B), SUPER 3G, international mobile telecommunications-advanced (IMT-advanced), a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the multiple systems may also be combined (for example, a combination of LTE or LTE-A and 5G, etc.) for application.

In embodiments of the disclosure, the continuous emergence of new Internet applications such as a new generation of augmented reality (AR), virtual reality (VR), and vehicle-to-vehicle (V2V) communication places a higher requirement on wireless communication technology, and drives the continuous evolution of wireless communication technology to meet needs of applications. Currently, the cellular mobile communication technology is in a next-generation technology of evolution stage. An importance feature of next-generation technology is an ability to support flexible configuration across multiple business types. Different service types have different requirements for the wireless communication technology. For example, an enhanced mobile broadband (eMBB) mainly requires a big bandwidth and a high velocity, etc; an ultra-reliable low-latency communications (URLLC) mainly requires a high reliability and a low latency; and a massive machine type communication (mMTC) mainly requires a large number of connections. Therefore, a next-generation wireless communication system needs flexible and configurable designs to support a transmission of various service types.

With the development of wireless communication technology, the requirement to improve a frequency efficiency or enhance a coverage becomes increasingly urgent. Therefore, a MIMO technology emerges, which improves a communication quality by deploying multiple transmitting antennas at a transmitting end and multiple receiving antennas a receiving end, allowing signals to be transmitted and received via the multiple antennas at both ends. In a MIMO system, in order to improve a signal transmission performance and a system capacity, the network device needs to determine an optimal precoding vector based on CSI fed back by the terminal, and then precodes downlink data. The terminal feeds back a PMI to the network device via the CSI, such that the network device obtains a downlink precoding matrix.

It should be noted that the above precoding matrix may also be described as a codebook.

In some possible embodiments, a CSI feedback based on a Type II codebook includes indication reporting of a precoding matrix indicator (PMI), the PMI also includes indication information of SD bases, and the indication information may be indicated by $\left⌈{log}_{2}\left({O}_{1}{O}_{2}\right)\right⌉ + \left⌈{log}_{2}\left(\begin{matrix}{N}_{1} {N}_{2} \\ L\end{matrix}\right)\right⌉$ bits, where *N*₁ represents a quantity of antenna ports in a horizontal dimension, *N*₂ represents a quantity of antenna ports in a vertical dimension, O₁ represents a discrete Fourier transform (DFT) oversampling factor of in the horizontal dimension, O₂ represents a DTF oversampling factor in the vertical dimension, and L represents a total quantity of SD bases.

In some possible implementations, the SD bases are taken from a DFT matrix. Each column vector in the DFT matrix may be called one DFT vector. In other words, the SD basis may be the DFT vector. For example, the SD basis may be a DFT vector defined in the type II codebook of a 3GPP protocol TS 38.214 version. Each SD basis is calculated by a Kronecker product of a DFT basis in the horizontal dimension and a DFT basis in the vertical dimension.

In some possible embodiments, the above SD basis may be described as a SD beam basis, beam basis, or beam.

In some possible embodiments, the above *N*₁*, N*₂*,* O₁, O₂ and *L* may be configured by the network device and indicated to the terminal via a higher-layer signaling. For example, the above higher-level signaling may include: a radio resource control (RRC) signaling, a broadcast message, a system message, a medium access control (MAC) control element (CE), downlink control information (DCI), or a signaling carried by physical downlink share channel (PDSCH), etc.

For example, values of *N*₁ and *N*₂ may be configured via a higher-layer signaling parameter *n1-n2-codebookSubsetRestriction,* and values of O₁ and O₂ related may be referred to Table 5.2.2.2.1-2 in the 3GPP protocol TS 38.214 version.

For example, a value of *L* may be configured via a higher-level signaling parameter *numberOfBeams.*

In some possible embodiments, when a quantity of antenna ports in the MIMO system increases significantly, i.e., the values of *N*₁ and *N*₂ are very large, an indication overhead of the SD bases may also increase significantly in a case that $\left⌈{log}_{2}\left({O}_{1}{O}_{2}\right)\right⌉ + \left⌈{log}_{2}\left(\begin{matrix}{N}_{1} {N}_{2} \\ L\end{matrix}\right)\right⌉ bits$ are employed to indicate the SD bases. For example, with the values of O₁ and O₂ remaining unchanged, assuming *L* = 4, *N*₁ = 8, *N*₂ = 2, and $\left⌈{log}_{2}\left({O}_{1}{O}_{2}\right)\right⌉ + \left⌈{log}_{2}\left(\begin{matrix}{N}_{1} {N}_{2} \\ L\end{matrix}\right)\right⌉ = 11$ bits, when the values of *N*₁ and *N*₂ increase, *N*₁ = 16, and *N*₂ = 4, that is, the quantity of antenna ports increases to 4 times the original quantity. At this time, $\left⌈{log}_{2}\left({O}_{1}{O}_{2}\right)\right⌉ + \left⌈{log}_{2}\left(\begin{matrix}{N}_{1} {N}_{2} \\ L\end{matrix}\right)\right⌉ = 20$ bits, it may be seen that the indication overhead of the SD bases increases by nearly double.

Furthermore, when a combination coefficient corresponding to *L* SD bases is calculated, it involves a calculation of singular value decomposition (SVD) in *N*₁*N*₂ dimensions. When a value of *N*₁*N*₂ is very large, a computational complexity of the terminal may correspondingly also increase significantly.

It may be seen that a system overhead used in processes such as a PMI feedback and an SVD calculation by the terminal is positively correlated with a quantity *N*₁*N*₂ of antenna ports (which may also be understood as a dimension of information). Therefore, the larger *N*₁*N*₂ is, the more the system overhead may increase significantly.

To address the above technical problems, embodiments of the disclosure provide a method and apparatus for CSI feedback, and a storage medium, to reduce an indication overhead of the SD bases.

FIG. 2A is a first flow chart illustrating a method for CSI feedback according to an embodiment of the disclosure. Embodiments of the disclosure relate to the method for the CSI feedback, which is applied to a communication system 100. As illustrated in FIG. 2A, the method for the CSI feedback of embodiments of the disclosure includes step S2110 to step S2140.

At step S2110, a network device sends third information.

In some possible embodiments, a terminal receives the third information.

In some possible embodiments, the third information is used to indicate a quantity of one or more SD bases. The quantity of the one or more SD bases may include at least one of a quantity (denoted as *Lₕ*) of one or more SD bases in a horizontal dimension or a quantity (denoted as *Lᵥ*) of one or more SD bases in a vertical dimension.

In some possible embodiments, an SD basis fed back by the terminal is an SD basis selected by the terminal, while the network device may not consider the SD basis indicated by the terminal when determining the SD basis. Therefore, the network device may indicate the terminal to feed back at least one of one or more SD bases in the horizontal dimension or one or more SD bases in the vertical dimension by configuring at least one of *Lₕ* or *Lᵥ* to the terminal. For example, the terminal feeds back the one or more SD bases in the horizontal dimension in a case that the third information is used to indicate *Lₕ*; the terminal feeds back the one or more SD bases in the vertical dimension in a case that the third information is used to indicate *Lᵥ*; and the terminal feeds back the one or more SD bases in the horizontal dimension and the one or more SD bases in the vertical dimension in a case that the third information is used to indicate *Lₕ* and *Lᵥ*.

In some possible embodiments, the third information may be carried in a higher-level signaling and sent to the terminal. For example, the higher-level signaling may include an RRC signaling, a broadcast message, a system message, an MAC CE, a DCI or a signaling carried by a PDSCH, etc. For example, values of *Lₕ* and *Lᵥ* may be configured via a higher-level signaling parameter *numberOfBeams.*

At step S2120, the network device sends fifth information.

In some possible embodiments, the terminal receives the fifth information.

In some possible embodiments, the fifth information includes at least one of: a quantity (*N*₁) of antenna ports in the horizontal dimension, a quantity of antenna ports in the vertical dimension (*N*₂), an oversampling factor (O₁) in the horizontal dimension, or an oversampling factor (O₂) in the vertical dimension.

For example, the fifth information may include the values of *N*₁ and *N*₂, such that the terminal may determine corresponding O₁ and O₂ based on a protocol after receiving the fifth information. Alternatively, the fifth information may include *N*₁*, N*₂*,* O₁, and O₂.

In some embodiments, the network device may indicate the terminal to feed back at least one of the one or more SD bases in the horizontal dimension or the one or more SD bases in the vertical dimension by configuring the terminal with at least one of a combination of *N*₁ and O₁ or a combination of *N*₂ and O₂. For example, the terminal feeds back the one or more SD bases in the horizontal dimension in a case that the fifth information is used to indicate *N*₁ and O₁; the terminal feeds back the one or more SD bases in the vertical dimension in a case that the third information is used to indicate *N*₂ and O₂; and the terminal feeds back the one or more SD bases in the horizontal and the one or more SD bases in the vertical dimension in a case that the third information is used to indicate *N*₁*, N*₂*,* O₁ and O₂.

In some possible embodiments, the fifth information may be carried in the higher-layer signaling and sent to the terminal. For example, the higher-level signaling may include the RRC signaling, the broadcast message, the system message, the MAC CE, the DCI or the signaling carried by the PDSCH, etc. For example, the values of *N*₁ and *N*₂ may be configured via a higher-level signaling parameter *n1-n2-codebookSubsetRestriction.*

In some possible embodiments, the third information and the fifth information may be sent to the terminal together. For example, the third information and the fifth information may be carried on the same higher-layer signaling and sent together, or the third information and the fifth information may be carried on different higher-layer signalings and sent simultaneously.

In some possible embodiments, the third information and the fifth information may be sent to the terminal separately. For example, the third information and the fifth information may be carried on different higher-level signalings and sent in a time-division manner.

At step S2130, the terminal sends first information.

In some possible embodiments, the network device receives the first information.

In some possible embodiments, the first information is used to indicate at least one of one or more first SD bases in the horizontal dimension or one or more second SD bases in the vertical dimension.

In some possible embodiments, the first information is used to indicate at least one of the one or more first SD bases or the one or more second SD bases. The one or more first SD bases are SD bases in the horizontal dimension selected by the terminal. The one or more second SD bases are SD bases in the vertical dimension selected by the terminal.

In some possible embodiments, the first information may include a first field, and the one or more first SD bases may be indicated by the first field.

In some possible embodiments, the first information may include the first field, and indication information of the one or more first SD bases is carried in the first field and sent to the network device.

In some possible embodiments, a bit value of the first field is determined based on *N*₁ and *Lₕ*.

For example, the bit value of the first field may be calculated based on an expression (1):
$\left⌈{log}_{2}\left(\begin{matrix}{N}_{1} \\ {L}_{h}\end{matrix}\right)\right⌉$

Therefore, the terminal indicates the one or more first SD bases to the network device via $\left⌈{log}_{2}\left(\begin{matrix}{N}_{1} \\ {L}_{h}\end{matrix}\right)\right⌉$ bits, that is, the terminal selects *Lₕ* SD basis(bases) from *N*₁ candidate SD bases in the horizontal dimension.

In some possible embodiments, the first information may include a second field, and the one or more second SD bases may be indicated by the second field.

In some possible embodiments, the first information may include the second field, and indication information of the one or more second SD bases is carried in the second field and sent to the network device.

In some possible embodiments, a bit value of the second field is determined based on *N*₂ and *Lᵥ*.

For example, the bit value of the second field may be calculated based on an expression (2):
$\left⌈{log}_{2}\left(\begin{matrix}{N}_{2} \\ {L}_{v}\end{matrix}\right)\right⌉$

Therefore, the terminal indicates the one or more second SD bases to the network device via $\left⌈{log}_{2}\left(\begin{matrix}{N}_{2} \\ {L}_{v}\end{matrix}\right)\right⌉$ bits, that is, the terminal selects *Lᵥ* SD basis (bases) from *N*₂ candidate SD bases in the vertical dimensions.

In some possible embodiments, the first information may include the first field or the second field. In this case, the terminal indicates the one or more first SD bases or the one or more second SD bases to the network device.

In some possible embodiments, the first information may include the first field and the second field. In this case, the terminal indicates the one or more first SD bases and the one or more second SD bases to the network device.

In some possible embodiments, the first field and the second field may be different fields in the first information, and may also be the same field in the first information.

At step S2140, the terminal sends second information.

In some possible embodiments, the network device receives the second information.

In some possible embodiments, the second information is indication information of an oversampling factor.

In some possible embodiments, the second information is used to indicate an orthogonal SD basis group. The orthogonal SD basis group may include at least one of a first orthogonal SD basis group in the horizontal dimension or a second orthogonal SD basis group in the vertical dimension.

In some possible embodiments, the second information is used to indicate at least one of the first orthogonal SD basis group or the second orthogonal SD basis group. The first orthogonal SD basis group is an orthogonal SD basis group in the horizontal dimension selected by the terminal. The second orthogonal SD basis group is an orthogonal SD basis group in the vertical dimension selected by the terminal.

In some possible embodiments, the second information may include a fifth field, and the first orthogonal SD basis group may be indicated by the fifth field.

In some possible embodiments, a bit value of the fifth field is determined based on O₁.

For example, the bit value of the fifth field may be calculated based on an expression (3):
$\left⌈{log}_{2} {O}_{1}\right⌉$

Therefore, the terminal indicates the first orthogonal SD basis group to the network device via $\left⌈{log}_{2} {O}_{1}\right⌉$ bits, and the first orthogonal SD basis group may include *N*₁ orthogonal SD bases.

In some possible embodiments, the second information may include a sixth field, and the second orthogonal SD basis group may be indicated by the sixth field.

In some possible embodiments, a bit value of the sixth field is determined based on O₂.

For example, the bit value of the sixth field may be calculated based on an expression (4):
$\left⌈{log}_{2} {O}_{2}\right⌉$

Therefore, the terminal indicates the second orthogonal SD basis group to the network device via $\left⌈{log}_{2} {O}_{2}\right⌉$ bits, and the second orthogonal SD basis group may include *N*₂ orthogonal SD bases.

In some possible embodiments, the second information may include the fifth field or the sixth field. In this case, the terminal indicates the first orthogonal SD basis group or the second orthogonal SD basis group to the network device.

In some possible embodiments, the first information may include the fifth field and the sixth field. In this case, the terminal indicates the first orthogonal SD basis group and the second orthogonal SD basis group to the network device.

In some possible embodiments, the fifth field and the sixth field may be different fields in the second information, and may also be the same field in the second information.

In some possible embodiments, the terminal may indicate the one or more SD bases and the orthogonal SD basis group to the network device. At this point, the terminal may send the first information and the second information to the network device.

In some possible embodiments, the CSI feedback may be divided into a first part (part1) and a second part (part2). Part1 includes a rank of a codebook, a channel quality indication (CQI), and indication information of a quantity of non-zero coefficients of rank = v transmission layers or a combined coefficient of a broadband. Part2 includes indication information of at least one of SD bases, frequency domain bases, or time domain bases corresponding to rank = v, quantization information of a linear combination coefficient and non-zero coefficient position indication information. An information length in part2 is determined based on an instruction content included in part1. In an embodiment, v = 1, 2, ......, P, where P ∈ {1, 2, 4, 8}, and P is a quantity of ports in a CSI reference signal (CSI-RS) resource.

In some possible embodiments, the first information and the second information may be sent together to the network device. For example, the first information and the second information may be carried in the second part (part2) of the CSI and sent together.

In some possible embodiments, the terminal may send at least one of the first information or the second information to the network device based on a requirement of the terminal. In an embodiment, when the terminal only feeds back the first information, the network device may determine at least one of an orthogonal SD basis group in the horizontal dimension or an orthogonal SD basis group in the vertical dimension on its own, without referring to the first orthogonal SD basis group and the second orthogonal SD basis group selected by the terminal. In an embodiment, when the terminal only feeds back the second information, the network device may determine at least one of one or more SD bases in the horizontal dimension or one or more SD bases in the vertical dimension on its own, without referring to the one or more first SD bases and the one or more second SD bases selected by the terminal.

For example, for example, the network device configures L*ₕ* = 2 and L*ᵥ* = 2 for the terminal by the third information, and configures *N*₁ = 8, *N*₂ = 4, *O*₁ = 4, and *O*₂ = 4 for the terminal by the fifth information.

Since *N*₁ = 8, *N*₂ = 4, L*ₕ* = 2, and L*ᵥ* = 2, the terminal may send indication information of $\left⌈{log}_{2}\left(\begin{matrix}{N}_{1} \\ {L}_{h}\end{matrix}\right)\right⌉ = 5$ bits to indicate two SD bases (i.e., the first SD bases) selected by the terminal from eight candidate SD bases in the horizontal dimension. Additionally, the terminal may send indication information of $\left⌈{log}_{2}\left(\begin{matrix}{N}_{2} \\ {L}_{v}\end{matrix}\right)\right⌉ = 3$ bits to indicate two SD bases (i.e., the second SD bases) selected by the terminal from four candidate SD bases in the vertical dimension.

Since *O*₁ = *O*₂ = 4, the terminal may send indication information of $\left⌈{log}_{2} {O}_{1}\right⌉ = 2$ bits to indicate one orthogonal SD basis group (i.e., the first orthogonal SD basis) including eight orthogonal SD bases in the horizontal dimension and selected by the terminal. Additionally, the terminal may send indication information of $\left⌈{log}_{2} {O}_{2}\right⌉ = 2$ bits to indicate one orthogonal SD basis group (i.e., the second orthogonal SD basis) including four orthogonal SD bases in the vertical dimension and selected by the terminal.

Therefore, a total indication overhead of the terminal may be calculated based on an expression (5):
$\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉$

It may be seen that in a case that the terminal feeds back the SD bases and the orthogonal SD basis group via $\left⌈{log}_{2}\left(\begin{matrix}{N}_{1} {N}_{2} \\ L\end{matrix}\right)\right⌉ + \left⌈{log}_{2}\left({O}_{1}{O}_{2}\right)\right⌉$*,* an indication overhead is $\left⌈{log}_{2}\left(\begin{matrix}{N}_{1} {N}_{2} \\ L\end{matrix}\right)\right⌉ + \left⌈{log}_{2}\left({O}_{1}{O}_{2}\right)\right⌉ = 22$ bits, where L=L*ₕ*L*ᵥ*=4. In a case that the terminal feeds back the SD bases in the horizontal dimension, the SD bases in the vertical dimension, the orthogonal SD basis group in the horizontal dimension, and the orthogonal SD basis group in the vertical dimension via $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉$*,* an indication overhead is $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉ = 12$ bits, which is less than 22 bits, thus reducing the indication overhead of the SD bases.

The method for the CSI feedback involved in the embodiments of the disclosure may include at least one of steps S2110 to S2140. For example, steps S2110 and S2130 may be implemented as an independent embodiment. For example, steps S2130 to S2140 may be implemented as an independent embodiment. For example, steps S2110 to S2140 may be implemented as an independent embodiment. It should be noted that one or more steps in steps S2110 to S2140 are combined to a possible independent embodiment, which is not limited herein.

In some possible embodiments, steps S2120 and S2140 are alternative, and one or more of these steps may be omitted or replaced in different embodiments.

In some possible embodiments, steps S2110 and S2120 are alternative, and one or more of these steps may be omitted or replaced in different embodiments.

In some possible embodiments, step S2140 is alternative, and one or more of these steps may be omitted or replaced in different embodiments.

In some embodiments, steps S2110 and S2120 may be executed in an exchanged order or simultaneously, and steps S2130 and S2140 may be executed in an exchanged order or simultaneously.

In the above embodiments, the terminal sends the first information to the network device to indicate at least one of the one or more SD bases in the horizontal dimension or the one or more SD bases in the vertical dimension selected by itself, thus reducing the indication overhead of the SD bases.

In addition, to reduce a processing complexity of the terminal, the terminal may also perform SVD calculations on channel information in the horizontal dimension N₁ and channel information in the vertical dimension N₂.

FIG. 2B is a second flow chart illustrating a method for CSI feedback according to an embodiment of the disclosure. Embodiments of the disclosure relate to the method for the CSI feedback, which is applied to a communication system 100. As illustrated in FIG. 2B, the method for the CSI feedback of embodiments of the disclosure includes step S2210 to step S2240.

At step S2210, a network device sends third information.

For the alternative implementation of step S2210, please refer to the alternative implementation of step S2110 in FIG. 2A and other related parts in the embodiments involved in FIG. 2A, which is not repeated here.

In some possible embodiments, the third information is used to indicate a quantity of one or more SD bases. The quantity of the one or more SD bases may include at least one of *Lₕ* or *Lᵥ*.

At step S2220, the network device sends fifth information.

For the alternative implementation of step S2220, please refer to the alternative implementation of step S2120 in FIG. 2A and other related parts in the embodiments involved in FIG. 2A, which is not repeated here.

In some possible embodiments, the fifth information includes at least one of *N*₁*, N*₂*,* O₁ or O₂.

At step S2230, a terminal sends first information.

For the alternative implementation of step S2230, please refer to the alternative implementation of step S2130 in FIG. 2A and other related parts in the embodiments involved in FIG. 2A, which is not repeated here.

In some possible embodiments, the first information is used to indicate at least one of one or more first SD bases or one or more second SD bases.

At step S2240, the terminal sends second information.

In some possible embodiments, the network device receives the second information.

In some possible embodiments, the second information is indication information of an oversampling factor.

In some possible embodiments, the second information is used to indicate an orthogonal SD basis group.

In some possible embodiments, the second information may include a seventh field, and the orthogonal SD basis group may be indicated by the seventh field.

In some possible embodiments, a bit value of the seventh field is determined based on O₁ and O₂.

For example, the bit value of the fifth field may be calculated based on an expression (6):
$\left⌈{log}_{2}\left({O}_{1}{O}_{2}\right)\right⌉$

Therefore, the terminal indicates the orthogonal SD basis group to the network device via $\left⌈{log}_{2}\left({O}_{1}{O}_{2}\right)\right⌉$ bits, and the orthogonal SD basis group may include *N*₁*N*₂ orthogonal SD bases.

In some possible embodiments, the terminal may indicate the one or more SD bases and the orthogonal SD basis group to the network device. At this point, the terminal may send the first information and the second information to the network device.

In some possible embodiments, the CSI feedback may be divided into a first part (part1) and a second part (part2). Part1 includes a rank of codebook, a channel quality indication (CQI), and indication information of a quantity of non-zero coefficients of rank = v transmission layers or a combined coefficient of broadband. Part2 includes indication information of at least one of SD bases, frequency domain bases, or time domain bases corresponding to rank = v, quantization information of linear combination coefficient and non-zero coefficient position indication information. An information length of part2 is determined based on an instruction content included in part1.

In some embodiments, the first information and the second information may be sent together to the network device. For example, the first information and the second information may be carried in the second part (part2) of the CSI and sent together.

In some possible embodiments, the terminal may send at least one of the first information or the second information to the network device based on a requirement of the terminal. In an embodiment, when the terminal only feeds back the first information, the network device may determine an orthogonal SD basis group on its own, without referring to the orthogonal SD basis group selected by the terminal. In an embodiment, when the terminal only feeds back the second information, the network device may determine at least one of one or more SD bases in the horizontal dimension or one or more SD bases in the vertical dimension on its own, without referring to the one or more first SD bases and the one or more second SD bases selected by the terminal.

For example, for example, the network device configures L*ₕ* = 2 and L*ᵥ* = 2 for the terminal by the third information, and configures *N*₁ = 8, *N*₂ = 4, *O*₁ = 4, and *O*₂ = 4 for the terminal by the fifth information.

Since *N*₁ = 8, *N*₂ = 4, L*ₕ* = 2, and L*ᵥ* = 2, the terminal may send indication information of $\left⌈{log}_{2}\left(\begin{matrix}{N}_{1} \\ {L}_{h}\end{matrix}\right)\right⌉ = 5$ bits to indicate two SD bases (i.e., the first SD bases) selected by the terminal from eight candidate SD bases in the horizontal dimension. Additionally, the terminal may send indication information of $\left⌈{log}_{2}\left(\begin{matrix}{N}_{2} \\ {L}_{v}\end{matrix}\right)\right⌉ = 3$ bits to indicate two SD bases (i.e., the second SD bases) selected by the terminal from four candidate SD bases in the vertical dimension.

Since *O*₁ = *O*₂ = 4, the terminal may send indication information of $\left⌈{log}_{2} {O}_{1}\right⌉ = 2$ bits to indicate one orthogonal SD basis group (i.e., the first orthogonal SD basis) including eight orthogonal SD bases in the horizontal dimension and selected by the terminal. Additionally, the terminal may send indication information of $\left⌈{log}_{2} {O}_{2}\right⌉ = 2$ bits to indicate one orthogonal SD basis group (i.e., the second orthogonal SD basis) including four orthogonal SD bases in the vertical dimension and selected by the terminal.

Therefore, a total indication overhead of the terminal may be calculated based on an expression (7):
$\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2}\left({O}_{1}{O}_{2}\right)\right⌉$

It may be seen that in a case that the terminal feeds back the SD bases and the orthogonal SD basis group via $\left⌈{log}_{2}\left(\begin{matrix}{N}_{1} {N}_{2} \\ L\end{matrix}\right)\right⌉ + \left⌈{log}_{2}\left({O}_{1}{O}_{2}\right)\right⌉$*,* an indication overhead is $\left⌈{log}_{2}\left(\begin{matrix}{N}_{1} {N}_{2} \\ L\end{matrix}\right)\right⌉ + \left⌈{log}_{2}\left({O}_{1}{O}_{2}\right)\right⌉ = 22$ bits, where L=L*ₕ*L*ᵥ*=4. In a case that the terminal feeds back the one or more SD bases in the horizontal dimension, the one or more SD bases in the vertical dimension, and the orthogonal SD basis groups via $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2}\left({O}_{1}{O}_{2}\right)\right⌉$ *,* an indication overhead is $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2}\left({O}_{1}{O}_{2}\right)\right⌉ = 12$ bits, which is less than 22 bits, thus reducing the indication overhead of the SD bases.

The method for the CSI feedback involved in the embodiments of the disclosure may include at least one of steps S2210 to S2240. For example, steps S2210 and S2230 may be implemented as an independent embodiment. For example, steps S2230 to S2240 may be implemented as an independent embodiment. For example, steps S2210 to S2240 may be implemented as an independent embodiment. It should be noted that one or more steps in steps S2210 to S2240 are combined to a possible independent embodiment, which is not limited herein.

In some possible embodiments, steps S2220 and S2240 are alternative, and one or more of these steps may be omitted or replaced in different embodiments.

In some possible embodiments, steps S2210 and S2220 are alternative, and one or more of these steps may be omitted or replaced in different embodiments.

In some possible embodiments, step S2240 is alternative, and one or more of these steps may be omitted or replaced in different embodiments.

In some embodiments, steps S2210 and S2220 may be executed in an exchanged order or simultaneously, and steps S2230 and S2240 may be executed in an exchanged order or simultaneously.

In the above embodiments, the terminal sends the first information to the network device to indicate at least one of the one or more SD bases in the horizontal dimension or the one or more SD bases in the vertical dimension selected by itself, thus reducing the indication overhead of the SD bases.

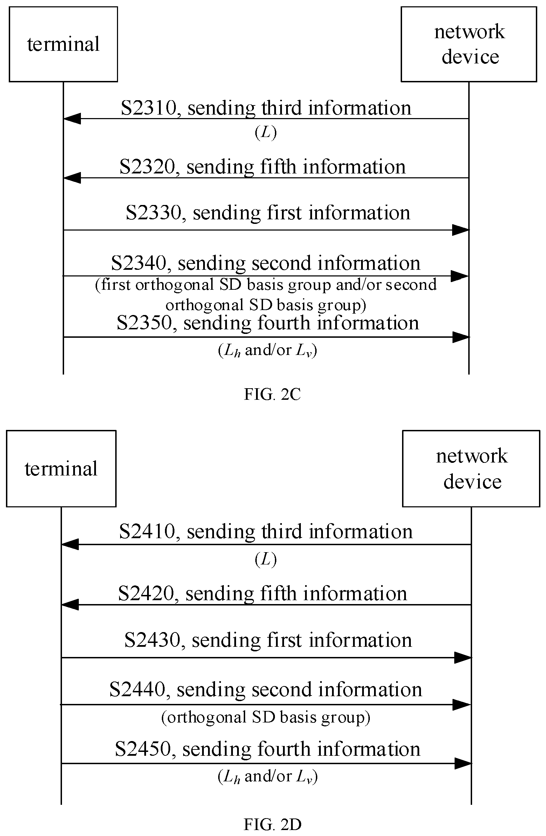

FIG. 2C is a third flow chart illustrating a method for CSI feedback according to an embodiment of the disclosure. Embodiments of the disclosure relate to the method for the CSI feedback, which is applied to a communication system 100. As illustrated in FIG. 2C, the method for the CSI feedback of embodiments of the disclosure includes step S2310 to step S2350.

At step S2310, a network device sends third information.

In some possible embodiments, a terminal receives the third information.

In some possible embodiments, the third information is used to indicate a total quantity (i.e., *L*) of one or more SD bases. *L* is a product of *Lₕ* and *Lᵥ,* that is, *L*=*Lₕ* · *Lᵥ.*

In some possible embodiments, the third information may be carried in a higher-level signaling and sent to the terminal. For example, the higher-level signaling may include an RRC signaling, a broadcast message, a system message, an MAC CE, a DCI or a signaling carried by a PDSCH, etc. For example, a value of *L* may be configured via a higher-level signaling parameter *numberOfBeams.*

At step S2320, the network device sends fifth information.

For the alternative implementation of step S2320, please refer to the alternative implementation of step S2120 in FIG. 2A and other related parts in the embodiments involved in FIG. 2A, which is not repeated here.

In some possible embodiments, the fifth information includes at least one of *N*₁*, N*₂*,* O₁, or O₂.

At step S2330, the terminal sends first information.

For the alternative implementation of step S2330, please refer to the alternative implementation of step S2130 in FIG. 2A and other related parts in the embodiments involved in FIG. 2A, which is not repeated here.

In some possible embodiments, the first information is used to indicate at least one of one or more first SD bases or one or more second SD bases.

At step S2340, the terminal sends second information.

For the alternative implementation of step S2340, please refer to the alternative implementation of step S2140 in FIG. 2A and other related parts in the embodiments involved in FIG. 2A, which is not repeated here.

In some possible embodiments, the second information is used to indicate at least one of a first orthogonal SD basis group or a second orthogonal SD basis group.

At step S2350, the terminal sends fourth information.

In some possible embodiments, the network device receives the fourth information.

In some possible embodiments, the fourth information is used to indicate at least one of a quantity of the one or more first SD bases or a quantity of one or more second SD bases. For example, the quantity of the one or more first SD bases is equal to *Lₕ*, and the quantity of the one or more second SD bases is equal to *Lᵥ*.

In some possible embodiments, the fourth information includes a third field, and the quantity of the one or more first SD bases is indicated by the third field.

In some possible embodiments, the fourth information includes the third field, and the quantity of the one or more first SD bases is carried in the third field and sent to the network device.

In some possible embodiments, a bit value of the third field is determined based on *N*₁ or *L*.

For example, the bit value of the third field may be calculated based on an expression (8) or (9):
$\left⌈{log}_{2}L\right⌉$
$\left⌈{log}_{2} {N}_{1}\right⌉$

Therefore, the terminal indicates the quantity such as *Lₕ* of the one or more first SD bases to the network device via $\left⌈{log}_{2} L\right⌉$ bits or $\left⌈{log}_{2} {N}_{1}\right⌉$ bits.

In some possible embodiments, the bit value of the third field is a preset length. For example, the bit value of the third field may be a first preset value, such as a₁ bits.

In some possible embodiments, the first preset value may be determined based on *N*₁*.*

In some possible embodiments, the fourth information includes a fourth field, and the quantity of the one or more second SD bases is indicated by the fourth field.

In some possible embodiments, the fourth information includes the third field, and the quantity of the one or more second SD bases is carried in the fourth field and sent to the network device.

In some possible embodiments, a bit value of the fourth field is determined based on *N*₂ or *L*.

For example, the bit value of the fourth field may be calculated based on an expression (8) or (10):
$\left⌈{log}_{2} {N}_{2}\right⌉$

Therefore, the terminal indicates the quantity such as *Lᵥ* of the one or more second SD bases to the network device via $\left⌈{log}_{2} L\right⌉$ bits or $\left⌈{log}_{2} {N}_{2}\right⌉$ bits.

In some possible embodiments, the bit value of the fourth field is a preset length. For example, the bit value of the fourth field may be a second preset value, such as a₂ bits.

In some possible embodiments, the second preset value may be determined based on *N*₂.

For example, the terminal may send the fourth information in, but is not limited to, the following manners:
manner 1, indicating *Lₕ* via $\left⌈{log}_{2} L\right⌉$ bits and indicating *Lᵥ* via $\left⌈{log}_{2} L\right⌉$ bits;
manner 2, indicating *Lₕ* via $\left⌈{log}_{2} {N}_{1}\right⌉$ bits and indicating *Lᵥ* via $\left⌈{log}_{2} {N}_{2}\right⌉$ bits;
manner 3, indicating *Lₕ* via $\left⌈{log}_{2} L\right⌉$ bits and indicating *Lᵥ* via $\left⌈{log}_{2} {N}_{2}\right⌉$ bits;
manner 4, indicating *Lₕ* via $\left⌈{log}_{2} {N}_{1}\right⌉$ bits and indicating *Lᵥ* via $\left⌈{log}_{2} L\right⌉$ bits; and
manner 5, indicating *Lₕ* via a₁ bits and indicating *Lᵥ* via a₂ bits.

Of course, *Lₕ* and *Lᵥ* may also be indicated by a pairwise combination of $\left⌈{log}_{2} L\right⌉$ bits, $\left⌈{log}_{2} {N}_{1}\right⌉$ bits, $\left⌈{log}_{2} {N}_{2}\right⌉$ bits, a₁ bits and a₂ bits, which is not limited in detail by embodiments of the disclosure.

In some possible embodiments, the CSI feedback may be divided into a first part (part1) and a second part (part2). Part1 includes a rank of codebook, a channel quality indication (CQI), and indication information of a quantity of non-zero coefficients of rank = v transmission layers or a combined coefficient of broadband. Part2 includes indication information of at least one of SD bases, frequency domain bases, or time domain bases corresponding to rank = v, quantization information of linear combination coefficient and non-zero coefficient position indication information. An information length of part2 is determined based on an instruction content included in part1.

In some possible embodiments, the first information and the second information may be sent together to the network device. For example, the first information and the second information may be carried in the second part (part2) of the CSI and sent together.

In some embodiments, the fourth information may be sent to the network device together with the first information and the second information. For example, the first information and the second information may be carried in the second part (part2) of the CSI and sent, or the first information and the second information may be carried in the first part (part1) of the CSI and sent.

In some possible embodiments, the terminal may send at least one of the first information, the second information, or the fourth information to the network device based on a requirement of the terminal. In an embodiment, when the terminal only feeds back the first information, the network device may determine at least one of an orthogonal SD basis group in the horizontal dimension or an orthogonal SD basis group in the vertical dimension on its own, without referring to the first orthogonal SD basis group and the second orthogonal SD basis group selected by the terminal. In an embodiment, when the terminal only feeds back the second information, the network device may determine at least one of one or more SD bases in the horizontal dimension or one or more SD bases in the vertical dimension on its own, without referring to the one or more first SD bases and the one or more second SD bases selected by the terminal. In an embodiment, when the terminal only feeds back the fourth information, the network device may determine at least one of a quantity of SD bases in the horizontal dimension or a quantity of SD bases in the vertical dimension on its own, without referring to the quantity of the one or more first SD bases and the quantity of the one or more second SD bases selected by the terminal.

For example, for example, the network device configures *L*=4 for the terminal by the third information, and configures *N*₁ = 8, *N*₂ = 4, *O*₁ = 4, and *O*₂ = 4 for the terminal by the fifth information.

Since *N*₁ = 8, *N*₂ = 4, and *L*=4, the terminal may employ any one of the above manners 1 to 5 to indicate *Lₕ* and *Lᵥ*. In a case that the manner 1 is employed, an indication overhead for *Lₕ* and *Lᵥ* is $\left⌈{log}_{2} L\right⌉ + \left⌈{log}_{2} L\right⌉ = 4$ bits. In a case that the manner 2 is employed, an indication overhead for *Lₕ* and *Lᵥ* is $\left⌈{log}_{2} {N}_{1}\right⌉ + \left⌈{log}_{2} {N}_{2}\right⌉ = 5$ bits. In a case that the manner 3 is employed, an indication overhead for *Lₕ* and *Lᵥ* is $\left⌈{log}_{2} L\right⌉ + \left⌈{log}_{2} {N}_{2}\right⌉ = 4$ bits. In a case that the manner 4 is employed, an indication overhead for *Lₕ* and *Lᵥ* is $\left⌈{log}_{2} {N}_{1}\right⌉ + \left⌈{log}_{2} L\right⌉ = 5$ bits. In a case that the manner 5 is employed, an indication overhead for *Lₕ* and *Lᵥ* is a₁ + a₂ = 3 + 2 = 5 bits.

In a case that the terminal selects *Lₕ* = 2 and *Lᵥ* = 2 based on a channel condition estimated according to the CSI-RS, the terminal may send indication information $\left⌈{log}_{2}\left(\begin{matrix}{N}_{1} \\ {L}_{h}\end{matrix}\right)\right⌉ = 5$ bits to indicate two SD bases (i.e., the first SD bases) selected by the terminal from eight candidate SD bases in the horizontal dimension. Additionally, the terminal may send indication information $\left⌈{log}_{2}\left(\begin{matrix}{N}_{2} \\ {L}_{v}\end{matrix}\right)\right⌉ = 3$ bits to indicate two SD bases (i.e., the second SD bases) selected by the terminal from four candidate SD bases in the vertical dimension.

Since *O*₁ = *O*₂ = 4, the terminal may send indication information $\left⌈{log}_{2} {O}_{1}\right⌉ =$ 2 bits to indicate one orthogonal SD basis group (i.e., the first orthogonal SD basis) including eight orthogonal SD bases in the horizontal dimension and selected by the terminal. Additionally, the terminal may send indication information $\left⌈{log}_{2} {O}_{2}\right⌉ = 2$ bits to indicate one orthogonal SD basis group (i.e., the second orthogonal SD basis) including four orthogonal SD bases in the vertical dimension and selected by the terminal.

Therefore, in a case that the manner 1 or the manner 3 is employed to indicate *Lₕ* and *Lᵥ* and an indication overhead for *Lₕ* and *Lᵥ* is 4 bits, a total indication overhead of the terminal may be calculated based on an expression (11):
$\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉ + 4$

In a case that the manner 2, the manner 4, or the manner 5 is employed to indicate *Lₕ* and *Lᵥ* and an indication overhead for *Lₕ* and *Lᵥ* is 5 bits, a total indication overhead of the terminal may be calculated based on an expression (12):
$\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉ + 5$

It may be seen that in a case that the terminal feeds back the SD bases and the orthogonal SD basis group via $\left⌈{log}_{2}\left(\begin{matrix}{N}_{1} {N}_{2} \\ L\end{matrix}\right)\right⌉ + \left⌈{log}_{2}\left({O}_{1}{O}_{2}\right)\right⌉$*,* an indication overhead is $\left⌈{log}_{2}\left(\begin{matrix}{N}_{1} {N}_{2} \\ L\end{matrix}\right)\right⌉ + \left⌈{log}_{2}\left({O}_{1}{O}_{2}\right)\right⌉ = 22$ bits, where L=L*ₕ*L*ᵥ*=4. In a case that the terminal feeds back the one or more SD bases in the horizontal dimension, the one or more SD bases in the vertical dimension, the orthogonal SD basis group in the horizontal dimension, the orthogonal SD basis group in the vertical dimension, *Lₕ* and *Lᵥ* via $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉ + 4$ or $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉ + 5$, an indication overhead is $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉ + 4 = 16$ bits or $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2} {O}_{1}\right⌉ + \left⌈{log}_{2} {O}_{2}\right⌉ + 5 = 17$ bits, which is less than 22 bits, thus reducing the indication overhead of SD bases.

The method for the CSI feedback involved in the embodiments of the disclosure may include at least one of steps S2310 to S2350. For example, steps S2310 and S2330 may be implemented as an independent embodiment. For example, steps S2330 to S2340 may be implemented as an independent embodiment. For example, steps S2330 to S2350 may be implemented as an independent embodiment. For example, steps S2310 to S2340 may be implemented as an independent embodiment. For example, steps S2310 to S2350 may be implemented as an independent embodiment. It should be noted that one or more steps in steps S2310 to S2350 constitute a possible independent embodiment, which is not limited herein.

In some possible embodiments, steps S2320, S2340 and S2350 are alternative, and one or more of these steps may be omitted or replaced in different embodiments.

In some possible embodiments, steps S2310, S2320 and S2350 are alternative, and one or more of these steps may be omitted or replaced in different embodiments.

In some possible embodiments, steps S2320 and S2340 are alternative, and one or more of these steps may be omitted or replaced in different embodiments.

In some possible embodiments, steps S2310 and S2320 are alternative, and one or more of these steps may be omitted or replaced in different embodiments.

In some possible embodiments, step S2340 is alternative, and one or more of these steps may be omitted or replaced in different embodiments.

In some possible embodiments, step S2350 is alternative, and one or more of these steps may be omitted or replaced in different embodiments.

In some embodiments, steps S2310 and S2320 may be executed in an exchanged order or simultaneously, and steps S2330, S2340 and S2350 may be executed in an exchanged order or simultaneously.

In the above embodiments, the terminal sends the first information to the network device to indicate at least one of the one or more SD bases in the horizontal dimension or the one or more SD bases in the vertical dimension selected by itself, thus reducing the indication overhead of the SD bases.

FIG. 2D is a fourth flow chart illustrating a method for the CSI feedback according to an embodiment of the disclosure. Embodiments of the disclosure relate to the method for the CSI feedback, which is applied to a communication system 100. As illustrated in FIG. 2D, the method for the CSI feedback of embodiments of the disclosure includes step S2410 to step S2450.

At step S2410, a network device sends third information.

For the alternative implementation of step S2410, please refer to the alternative implementation of step S2310 in FIG. 2C and other related parts in the embodiments involved in FIG. 2C, which is not repeated here.

In some possible embodiments, the third information is used to indicate a total quantity (i.e., *L*) of one or more SD bases. *L* is a product of *Lₕ* and *Lᵥ,* that is, *L*=*Lₕ · Lᵥ.*

At step S2420, the network device sends fifth information.

For the alternative implementation of step S2420, please refer to the alternative implementation of step S2120 in FIG. 2A and other related parts in the embodiments involved in FIG. 2A, which is not repeated here.

In some possible embodiments, the fifth information includes at least one of *N*₁*, N*₂*,* O₁, or O₂.

At step S2430, a terminal sends first information.

For the alternative implementation of step S2430, please refer to the alternative implementation of the S2130 in FIG. 2A and other related parts in the embodiments involved in FIG. 2A, which is not be repeated here.

In some possible embodiments, the first information is used to indicate at least one of one or more first SD bases or one or more second SD bases.

At step S2440, the terminal sends second information.

For the alternative implementation of step S2440, please refer to the alternative implementation of step S2240 in FIG. 2B and other related parts in the embodiments involved in FIG. 2B, which is not repeated here.

In some possible embodiments, the second information is used to indicate an orthogonal SD basis group.

At step S2450, the terminal sends fourth information.

For the alternative implementation of step S2450, please refer to the alternative implementation of step S2350 in FIG. 2C and other related parts in the embodiments involved in FIG. 2C, which is not repeated here.

In some possible embodiments, the fourth information is used to indicate at least one of a quantity of the one or more first SD bases or a quantity of one or more second SD bases. For example, the quantity of the one or more first SD bases is equal to *Lₕ*, and the quantity of the one or more second SD bases is equal to *Lᵥ*.

In some possible embodiments, the terminal may send at least one of the first information, the second information, or the fourth information to the network device based on a requirement of the terminal. In an embodiment, in a case that the terminal only feeds back the first information, the network device may determine an orthogonal SD basis group on its own, without referring to the orthogonal SD basis group selected by the terminal. In an embodiment, in a case that the terminal only feeds back the second information, the network device may determine at least one of one or more SD bases in the horizontal dimension or one or more SD bases in the vertical dimension on its own, without referring to the one or more first SD bases and the one or more second SD bases selected by the terminal. In an embodiment, in a case that the terminal only feeds back the fourth information, the network device may determine at least one of a quantity of SD bases in the horizontal dimension or a quantity of SD bases in the vertical dimension on its own, without referring to the quantity of the one or more first SD bases and the quantity of the one or more second SD bases selected by the terminal.

The method for the CSI feedback involved in the embodiments of the disclosure may include at least one of steps S2410 to S2450. For example, steps S2310 and S2430 may be implemented as an independent embodiment. For example, steps S2430 to S2440 may be implemented as an independent embodiment. For example, steps S2430 to S2450 may be implemented as an independent embodiment. For example, steps S2410 to S2440 may be implemented as an independent embodiment. For example, steps S2410 to S2450 may be implemented as an independent embodiment. It should be noted that one or more steps in steps S2410 to S2450 constitute a possible independent embodiment, which is not limited herein.

In some possible embodiments, steps S2420, S2440 and S2450 are alternative, and one or more of these steps may be omitted or replaced in different embodiments.

In some possible embodiments, steps S2410, S2420 and S2450 are alternative, and one or more of these steps may be omitted or replaced in different embodiments.

In some possible embodiments, steps S2420 and S2440 are alternative, and one or more of these steps may be omitted or replaced in different embodiments.

In some possible embodiments, steps S2410 and S2420 are alternative, and one or more of these steps may be omitted or replaced in different embodiments.

In some possible embodiments, step S2440 is alternative, and one or more of these steps may be omitted or replaced in different embodiments.

In some possible embodiments, step S2450 is alternative, and one or more of these steps may be omitted or replaced in different embodiments.

In some embodiments, steps S2410 and S2420 may be executed in an exchanged order or simultaneously, and steps S2430, S2440 and S2450 may be executed in an exchanged order or simultaneously.

In the above embodiments, the terminal sends the first information to the network device to indicate at least one of the one or more SD bases in the horizontal dimension or the one or more SD bases in the vertical dimension selected by itself, thus reducing the indication overhead of the SD bases.

In some embodiments, names are not limited to those recorded in the embodiments. The terms such as "information", "message", "signal", "signaling", "report", "configuration", "indication", "instruction", "command", "channel", "parameter", "domain", "field", "symbol", "symbol/code element", "codebook", "codeword", "codepoint", "bit", "data", "program", "chip", etc., may be used interchangeably.

In some embodiments, the terms such as "codebook", "codeword", and "precoding matrix" may be used interchangeably. For example, a codebook may be a collection of one or more codewords/precoding matrices.

In some embodiments, the terms such as "uplink", "physical uplink", etc. may be used interchangeably; terms such as "downlink", "physical downlink", etc. may be used interchangeably; and terms such as "side", "sidelink", "sidelink communication", "direct link", "direct communication", "direct link communication" etc. may be used interchangeably.

In some embodiments, the terms such as "downlink control information (DCI)", "downlink (DL) assignment", "DL DCI," "uplink (UL) grant", and "UL DCI" may be used interchangeably.

In some embodiments, the terms such as "PDSCH", "DL data" may be used interchangeably, and the terms such as "PUSCH", "UL data" may be used interchangeably.

In some embodiments, the terms such as "radio", "wireless", "radio access network (RAN)", "access network (AN)", and "RAN-based" may be used interchangeably.

In some embodiments, the terms such as "synchronization signal (SS)", "synchronization signal block (SSB)", "reference signal (RS)", "pilot", "pilot signal" may be used interchangeably.

In some embodiments, the terms such as wireless access scheme and waveform may be used interchangeably.

In some embodiments, the terms such as "precoding", "precoder", "weight", "precoding weight", "quasi-co-location (QCL)", "transmission configuration indication (TCI) status", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be used interchangeably.

In some embodiments, the terms such as "frame", "radio frame", "subframe", "slot", "sub-slot", "mini-slot", "symbol", "symbol", and "transmission time interval (TTI)" may be used interchangeably.

In some embodiments, the terms such as "acquiring", "obtaining", "getting", "receiving", "transmitting", "bidirectional transmission", "sending and/or receiving" may be used interchangeably, which may be interpreted as receiving from another entity, obtaining from a protocol, obtaining from a high layer, obtaining via processing by itself, autonomously implementing, and other meanings.

In some embodiments, the terms such as "sending", "transmitting", "reporting", "feedback", "delivering", "transmitting", "bidirectional transmission", "sending and/or receiving" may be used interchangeably.

In some embodiments, terms such as "certain", "predetermined", "preset", "set", "indicated", "a/an", "any", "first", etc. may be used interchangeably. "Certain A", "predetermined A", "preset A", "set A", "indicated A", "a/an A", "any A", "first A" may be interpreted as A predefined in a protocol, etc., or as A obtained via setting, configuration, or indication, etc., or as a certain A, a/an A, any A, or a first A, etc., which is not limited herein.

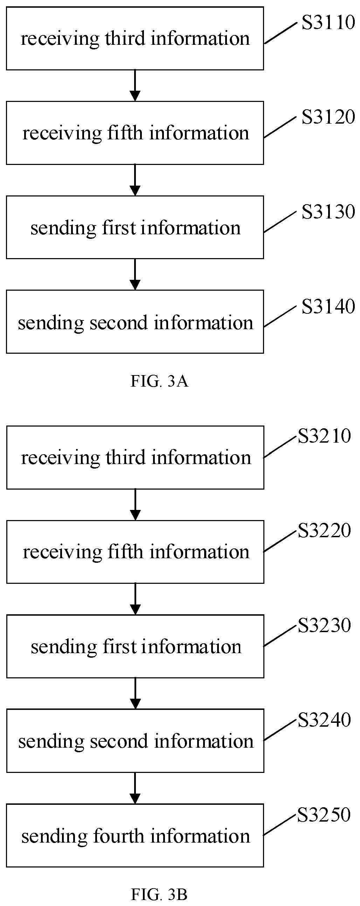

FIG. 3A is a first flow chart illustrating a method for CSI feedback executed by a terminal side according to an embodiment of the disclosure. Embodiments of the disclosure relate to the method for the CSI feedback, which is applied to a terminal 101 of a communication system 100. As illustrated in FIG. 3A, the method for the CSI feedback of embodiments of the disclosure includes step S3110 to step S3140.

At step S3110, third information is received.

For the alternative implementation of step S3110, please refer to the alternative implementation of step S2110 in FIG. 2A and other related parts in the embodiments involved in FIG. 2A, which is not repeated here.

In some possible embodiments, the terminal 101 receives the third information sent by a network device 102, but is not limited thereto; and may also receive the third information sent by other entities.

In some possible embodiments, the third information is configured by the network device 102 via a higher-layer signaling.

In some possible embodiments, the third information is used to indicate a quantity of one or more SD bases to the terminal 101, and the quantity of the one or more SD bases includes at least one of a quantity of one or more SD bases in a horizontal dimension or a quantity of one or more SD bases in a vertical dimension.

At step S3120, fifth information is received.

For the alternative implementation of step S3120, please refer to the alternative implementation of step S2120 in FIG. 2A and other related parts in the embodiments involved in FIG. 2A, which is not repeated here.

In some possible embodiments, the terminal 101 receives the fifth information sent by the network device 102, but is not limited thereto; and may also receive the fifth information sent by other entities.

In some possible embodiments, the fifth information is configured by the network device 102 via a higher-layer signaling.

At step S3130, first information is sent.

For the alternative implementation of step S3130, please refer to the alternative implementation of step S2130 in FIG. 2A and other related parts in the embodiments involved in FIG. 2A, which is not repeated here.

In some possible embodiments, the terminal 101 sends the first information to the network device 102, but is not limited thereto; and may also send the first information to other entities.

In some possible embodiments, the first information is used to indicate at least one of one or more first SD bases or one or more second SD bases selected by the terminal 101 to the network device 102.

At step S3140, second information is sent.

For the alternative implementation of step S3140, please refer to the alternative implementation of step S2140 in FIG. 2A, the alternative implementation of step S2240 in FIG. 2B, and other related parts in the embodiments involved in FIG. 2A and FIG. 2B, which is not repeated here.

In some possible embodiments, the terminal 101 sends the second information to the network device 102, but is not limited thereto; and may also send the second information to other entities.

In some possible embodiments, the second information is used to indicate at least one of a first orthogonal SD basis group or a second orthogonal SD basis group selected by the terminal 101, to the network device 102.

In some possible embodiments, the second information is used to indicate an orthogonal SD basis group selected by the terminal 101 to the network device 102.

The method for the CSI feedback involved in embodiments of the disclosure may include at least one of steps S3110 to S3140. For example, steps S3110 and S3130 may be implemented as an independent embodiment. For example, steps S3130 to S3140 may be implemented as an independent embodiment. For example, steps S3110 to S3140 may be implemented as an independent embodiment. It should be noted that one or more steps in steps S3110 to S3140 constitute a possible independent embodiment, which is not limited herein.

In some possible embodiments, steps S3120 and S3140 are alternative, and one or more of these steps may be omitted or replaced in different embodiments.

In some possible embodiments, steps S3110 and S3120 are alternative, and one or more of these steps may be omitted or replaced in different embodiments.

In some possible embodiments, step S3140 is alternative, and one or more of these steps may be omitted or replaced in different embodiments.

In some embodiments, steps S3110 and S3120 may be executed in an exchanged order or simultaneously, and steps S3130 and S3140 may be executed in an exchanged order or simultaneously.

FIG. 3B is a second flow chart illustrating a method for CSI feedback executed by a terminal side according to an embodiment of the disclosure. Embodiments of the disclosure relate to the method for the CSI feedback, which is applied to a communication system 100. As illustrated in FIG. 3B, the method for the CSI feedback of embodiments of the disclosure includes step S3210 to step S3250.

At step S3210, third information is received.

For the alternative implementation of step S3210, please refer to the alternative implementation of step S2310 in FIG. 2C and other related parts in the embodiments involved in FIG. 2B, which is not repeated here.

In some possible embodiments, a terminal 101 receives the third information sent by a network device 102, but is not limited thereto; and may also receive the third information sent by other entities.

In some possible embodiments, the third information is configured by the network device 102 via a higher-layer signaling.

At step S3220, fifth information is received.

For the alternative implementation of step S3220, please refer to the alternative implementation of step S2120 in FIG. 2A and other related parts in the embodiments involved in FIG. 2A, which is not repeated here.

In some possible embodiments, the terminal 101 receives the fifth information sent by the network device 102, but is not limited thereto; and may also receive the fifth information sent by other entities.

In some possible embodiments, the fifth information is configured by the network device 102 via a higher-layer signaling.

At step S3230, first information is sent.

For the alternative implementation of the step S3230, please refer to the alternative implementation of step S2130 in FIG. 2A and other related parts in the embodiments involved in FIG. 2A, which is not repeated here.

In some possible embodiments, the first information is used to indicate at least one of one or more first SD bases or one or more second SD bases selected by the terminal 101 to the network device 102.

At step S3240, second information is sent.

For the alternative implementation of step S3240, please refer to the alternative implementation of step S2140 in FIG. 2A, the alternative implementation of step S2240 in FIG. 2B, and other related parts in the embodiments involved in FIG. 2A and FIG. 2B, which is not repeated here.

In some possible embodiments, the second information is used to indicate at least one of a first orthogonal SD basis group or a second orthogonal SD basis group selected by the terminal 101 to the network device 102.

In some possible embodiments, the second information is used to indicate an orthogonal SD basis group selected by the terminal 101 to the network device 102.

At step S3250, fourth information is sent.

For the alternative implementation of step S3350, please refer to the alternative implementation of step S2350 in FIG. 2C and other related parts in the embodiments involved in FIG. 2C, which is not repeated here.

In some possible embodiments, the fourth information is used to indicate at least one of a quantity of one or more first SD bases or a quantity of one or more second SD bases. For example, the quantity of the one or more first SD bases is equal to *Lₕ*, and the quantity of the one or more second SD bases is equal to *Lᵥ*.

The method for the CSI feedback involved in the embodiments of the disclosure may include at least one of steps S3210 to S3250. For example, steps S3210 and S3230 may be implemented as an independent embodiment. For example, steps S3230 to S3240 may be implemented as an independent embodiment. For example, steps S3230 to S3250 may be implemented as an independent embodiment. For example, steps S3210 to S3240 may be implemented as an independent embodiment. For example, steps S3210 to S3250 may be implemented as an independent embodiment. It should be noted that one or more steps in steps S3210 to S3250 constitute a possible independent embodiment, which is not limited herein.

In some possible embodiments, steps S3220, S3240 and S3250 are alternative, and one or more of these steps may be omitted or replaced in different embodiments.

In some possible embodiments, steps S3210, S3220 and S3250 are alternative, and one or more of these steps may be omitted or replaced in different embodiments.

In some possible embodiments, steps S3220 and S3240 are alternative, and one or more of these steps may be omitted or replaced in different embodiments.

In some possible embodiments, steps S3210 and S3220 are alternative, and one or more of these steps may be omitted or replaced in different embodiments.

In some possible embodiments, step S3240 is alternative, and one or more of these steps may be omitted or replaced in different embodiments.

In some possible embodiments, step S3250 is alternative, and one or more of these steps may be omitted or replaced in different embodiments.

In some embodiments, steps S3210 and S3220 may be executed in an exchanged order or simultaneously, and steps S3230, S3240 and S3250 may be executed in an exchanged order or simultaneously.

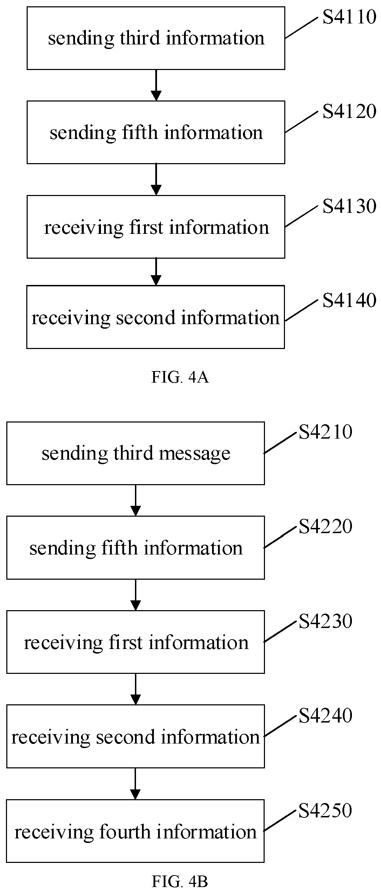

FIG. 4A is a first flow chart illustrating a method for CSI feedback executed by a network device side according to an embodiment of the disclosure. Embodiments of the disclosure relate to the method for the CSI feedback, which is applied to a network device 102 of a communication system 100. As illustrated in FIG. 4A, the method for the CSI feedback of embodiments of the disclosure includes step S41 10 to step S4140.

At step S4110, third information is sent.

For the alternative implementation of step S4110, please refer to the alternative implementation of step S2110 in FIG. 2A and other related parts in the embodiments involved in FIG. 2A, which is not repeated here.

In some possible embodiments, the network device 102 sends the third information to a terminal 101, but is not limited thereto; and may also send the third information to other entities.

In some possible embodiments, the third information is configured by the network device 102 via a higher-layer signaling.

In some possible embodiments, the third information is used to indicate a quantity of one or more SD bases to the terminal 101, and the quantity of the one or more SD bases includes at least one of a quantity of one or more SD bases in a horizontal dimension or a quantity of one or more SD bases in a vertical dimension.

At step S4120, fifth information is sent.

For the alternative implementation of step S4120, please refer to the alternative implementation of step S2120 in FIG. 2A and other related parts in the embodiments involved in FIG. 2A, which is not repeated here.

In some possible embodiments, the network device 102 sends the fifth information to the terminal 101, but is not limited thereto; and may also send the fifth information to other entities.

In some possible embodiments, the fifth information is configured by the network device 102 via a higher-layer signaling.

At step S4130, first information is received.

For the alternative implementation of step S4130, please refer to the alternative implementation of step S2130 in FIG. 2A and other related parts in the embodiments involved in FIG. 2A, which is not repeated here.

In some possible embodiments, the network device 102 receives the first information sent by the terminal 101, but is not limited thereto; and may also receive the first information sent by other entities.

In some possible embodiments, the first information is used to indicate at least one of one or more first SD bases or one or more second SD bases selected by the terminal 101.

At step S4140, second information is received.

For the alternative implementation of step S4140, please refer to the alternative implementation of step S2140 in FIG. 2A, the alternative implementation of step S2240 in FIG. 2B, and other related parts in the embodiments involved in FIG. 2A and FIG. 2B, which is not repeated here.

In some possible embodiments, the network device 102 receives the second information sent by the terminal 101, but is not limited thereto; and may also receive the second information sent by other entities.

In some possible embodiments, the second information is used to indicate at least one of a first orthogonal SD basis group or a second orthogonal SD basis group selected by the terminal 101 to the network device 102.

In some possible embodiments, the second information is used to indicate an orthogonal SD basis group selected by the terminal 101 to the network device 102.

The method for the CSI feedback involved in the embodiments of the disclosure may include at least one of steps S4110 to S4140. For example, steps S4110 and S4130 may be implemented as an independent embodiment. For example, steps S4130 to S4140 may be implemented as an independent embodiment. For example, steps S4110 to S4140 may be implemented as an independent embodiment. It should be noted that one or more steps in steps S4110 to S4140 constitute a possible independent embodiment, which is not limited herein.

In some possible embodiments, steps S4120 and S4140 are alternative, and one or more of these steps may be omitted or replaced in different embodiments.

In some possible embodiments, steps S4110 and S4120 are alternative, and one or more of these steps may be omitted or replaced in different embodiments.

In some possible embodiments, step S4140 is alternative, and one or more of these steps may be omitted or replaced in different embodiments.

In some embodiments, steps S4110 and S4120 may be executed in an exchanged order or simultaneously, and steps S4130 and S4140 may be executed in an exchanged order or simultaneously.

FIG. 4B is a second flow chart illustrating a method for CSI feedback executed by a network device side according to an embodiment of the disclosure. Embodiments of the disclosure relate to the method for the CSI feedback, which is applied to a network device 102 of a communication system 100. As illustrated in FIG. 4B, the method for the CSI feedback of embodiments of the disclosure includes step S4210 to step S4250.

At step S4210, third information is sent.

For the alternative implementation of step S4210, please refer to the alternative implementation of step S2310 in FIG. 2C and other related parts in the embodiments involved in FIG. 2C, which is not repeated here.

In some possible embodiments, the network device 102 sends the third information to a terminal 101, but is not limited thereto; and may also send the third information to other entities.

In some possible embodiments, the third information is configured by the network device 102 via a higher-layer signaling.

In some possible embodiments, the third information is used to indicate a quantity of one or more SD bases to the terminal 101, and the quantity of the one or more SD bases includes a total quantity of the one or more SD bases.

At step S4220, fifth information is sent.

For the alternative implementation of step S4220, please refer to the alternative implementation of step S2120 in FIG. 2A and other related parts in the embodiments involved in FIG. 2A, which is not repeated here.

In some possible embodiments, the network device 102 sends the fifth information to the terminal 101, but is not limited thereto; and may also send the fifth information to other entities.

In some possible embodiments, the fifth information is configured by the network device 102 via a higher-layer signaling.

At step S4230, first information is received.

For the alternative implementation of step S4230, please refer to the alternative implementation of step S2130 in FIG. 2A and other related parts in the embodiments involved in FIG. 2A, which is not repeated here.

In some possible embodiments, the network device 102 receives the first information sent by the terminal 101, but is not limited thereto; and may also receive the first information sent by other entities.

In some possible embodiments, the first information is used to indicate at least one of one or more first SD bases or one or more second SD bases selected by the terminal 101.

At step S4240, second information is received.

For the alternative implementation of step S4240, please refer to the alternative implementation of step S2140 in FIG. 2A, the alternative implementation of step S2240 in FIG. 2B, and other related parts in the embodiments involved in FIG. 2A and FIG. 2B, which is not repeated here.

In some possible embodiments, the network device 102 receives the second information sent by the terminal 101, but is not limited thereto; and may also receive the second information sent by other entities.

In some possible embodiments, the second information is used to indicate at least one of a first orthogonal SD basis group or a second orthogonal SD basis group selected by the terminal 101 to the network device 102.

In some possible embodiments, the second information is used to indicate an orthogonal SD basis group selected by the terminal 101 to the network device 102.

At step S4250, fourth information is received.

For the alternative implementation of step S4250, please refer to the alternative implementation of step S2350 in FIG. 2C and other related parts in the embodiments involved in FIG. 2C, which is not repeated here.

In some possible embodiments, the fourth information is used to indicate at least one of a quantity of one or more first SD bases or a quantity of one or more second SD bases. For example, the quantity of the one or more first SD bases is equal to *Lₕ*, and the quantity of the one or more second SD bases is equal to *Lᵥ*.

The method for the CSI feedback involved in embodiments of the disclosure may include at least one of steps S4210 to S4250. For example, steps S4210 and S4230 may be implemented as an independent embodiment. For example, steps S4230 to S4240 may be implemented as an independent embodiment. For example, steps S4230 to S4250 may be implemented as an independent embodiment. For example, steps S4210 to S4240 may be implemented as an independent embodiment. For example, steps S4210 to S4250 may be implemented as an independent embodiment. It should be noted that one or more steps in steps S4210 to S4250 constitute a possible independent embodiment, which is not limited herein.

In some possible embodiments, steps S4220, S4240 and S4250 are alternative, and one or more of these steps may be omitted or replaced in different embodiments.

In some possible embodiments, steps S4210, S4220 and S4250 are alternative, and one or more of these steps may be omitted or replaced in different embodiments.

In some possible embodiments, steps S4220 and S4240 are alternative, and one or more of these steps may be omitted or replaced in different embodiments.

In some possible embodiments, steps S4210 and S4220 are alternative, and one or more of these steps may be omitted or replaced in different embodiments.

In some possible embodiments, step S4240 is alternative, and one or more of these steps may be omitted or replaced in different embodiments.

In some possible embodiments, step S4250 is alternative, and one or more of these steps may be omitted or replaced in different embodiments.

In some embodiments, steps S4210 and S4220 may be executed in an exchanged order or simultaneously, and steps S4230, S4240 and S4250 may be executed in an exchanged order or simultaneously.

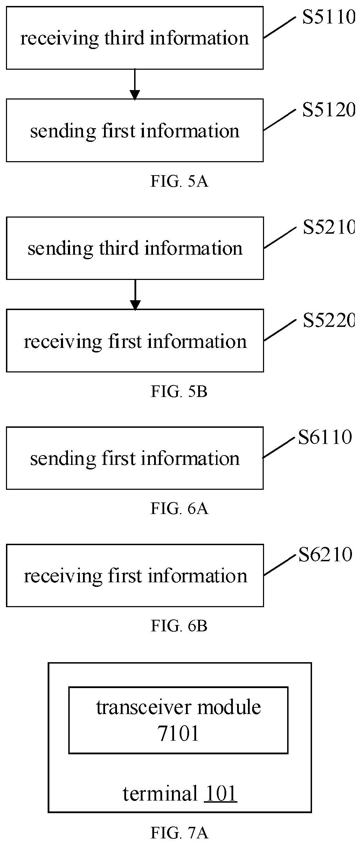

FIG. 5A is a third flow chart illustrating a method for CSI feedback executed by a terminal side according to an embodiment of the disclosure. Embodiments of the disclosure relate to the method for the CSI feedback, which is applied to a terminal 101 in a communication system 100. As illustrated in FIG. 5A, the method for the CSI feedback of embodiments of the disclosure includes step S5110 to step S5120.

At step S5110, third information is received.

For the alternative implementation of step S5110, please refer to the alternative implementation of step S2110 in FIG. 2A, the alternative implementation of step S2310 in FIG. 2C, and other related parts in the embodiments involved in FIG. 2A and FIG. 2C, which is not repeated here.

In some possible embodiments, the terminal 101 receives the third information sent by a network device 102, but is not limited thereto; and may also receive the third information sent by other entities.

In some possible embodiments, the third information is configured by the network device 102 via a higher-layer signaling.

In some possible embodiments, the third information is used to indicate a quantity of one or more SD bases to the terminal 101.

At step S5120, first information is sent.

For the alternative implementation of step S5120, please refer to the alternative implementation of step S2130 in FIG. 2A and other related parts in the embodiments involved in FIG. 2A, which is not repeated here.

In some possible embodiments, the terminal 101 sends the first information to the network device 102, but is not limited thereto; and may also send the first information to other entities.

In some possible embodiments, the first information is used to indicate at least one of one or more first SD bases or one or more second SD bases selected by the terminal 101 to the network device 102.

The method for the CSI feedback involved in the embodiments of the disclosure may include at least one of steps S5110 to S5120. For example, step S5120 may be implemented as an independent embodiment. For example, steps S5110 to S5120 may be implemented as an independent embodiment. It should be noted that one or more steps in steps S5110 to S5120 constitute a possible independent embodiment, which is not limited herein.

In some possible embodiments, step S5110 is alternative, and one or more of these steps may be omitted or replaced in different embodiments.

FIG. 5B is a third flow chart illustrating a method for CSI feedback executed by a network device side according to an embodiment of the disclosure. Embodiments of the disclosure relate to the method for the CSI feedback, which is applied to a network device 102 of a communication system 100. As illustrated in FIG. 5B, the method for the CSI feedback of embodiments of the disclosure includes step S5210 to step S5220.

At step S5210, third information is sent.

For the alternative implementation of step S5210, please refer to the alternative implementation of step S2110 in FIG. 2A, the alternative implementation of step S2310 in FIG. 2C, and other related parts in the embodiments involved in FIG. 2A and FIG. 2C, which is not repeated here.

In some possible embodiments, the network device 102 sends the third information to a terminal 101, but is not limited thereto; and may also send the third information to other entities.

In some possible embodiments, the third information is configured by the network device 102 via a higher-layer signaling.

In some possible embodiments, the third information is used to indicate a quantity of one or more SD bases to the terminal 101.

At step S5220, first information is received.

For the alternative implementation of step S5220, please refer to the alternative implementation of step S2130 in FIG. 2A and other related parts in the embodiments involved in FIG. 2A, which is not repeated here.

In some possible embodiments, the network device 102 receives the first information sent by the terminal 101, but is not limited thereto; and may also receive the first information sent by other entities.

In some possible embodiments, the first information is used to indicate at least one of one or more first SD bases or one or more second SD bases selected by the terminal 101.

The method for the CSI feedback involved in the embodiments of the disclosure may include at least one of steps S5210 to S5220. For example, step S5220 may be implemented as an independent embodiment. For example, steps S5210 to S5220 may be implemented as an independent embodiment. It should be noted that one or more steps in steps S5210 to S5220 constitute a possible independent embodiment, which is not limited herein.

In some possible embodiments, step S5210 is alternative, and one or more of these steps may be omitted or replaced in different embodiments.

FIG. 6A is a fourth flow chart illustrating a method for CSI feedback executed by a terminal side according to an embodiment of the disclosure. Embodiments of the disclosure relate to the method for the CSI feedback, which is applied to a terminal 101 of a communication system 100. As illustrated in FIG. 6A, the method for the CSI feedback of embodiments of the disclosure includes step S6110.

At step S6110, first information is sent.

For the alternative implementation of step S6110, please refer to step S2130 in FIG. 2A and other related parts in embodiments involved in FIG. 2A, which is not repeated here.

In some possible embodiments, the above method may include the method described in the embodiments on the above communication system side and terminal side, which is not repeated here.

FIG. 6B is a fourth flow chart illustrating a method for CSI feedback executed by a network device side according to an embodiment of the disclosure. Embodiments of the disclosure relate to the method for the CSI feedback, which is applied to a network device 102, such as an access network device, of a communication system 100. As illustrated in FIG. 6B, the method for the CSI feedback of embodiments of the disclosure includes step S6210.

At step S6210, first information is received.

For the alternative implementation of step S6210, please refer to step S2130 in FIG. 2A and other related parts in the embodiments involved in FIG. 2A, which is not repeated here.

In some possible embodiments, the above method may include the method described in the embodiments on the above communication system side, terminal side, and network device side, which is not repeated here.

In some possible embodiments, embodiments of the disclosure relate to the method for the CSI feedback, which may include the following schemes.

In a first scheme, quantities of one or more SD bases in a horizontal dimension and one or more SD bases in a vertical dimension configured by a network are L*ₕ* (i.e. a quantity of one or more SD bases in the horizontal dimension) and L*ᵥ* (i.e. a quantity of one or more SD bases in the vertical dimension). Then the terminal indicates L*ₕ* SD basis (i.e., one or more first SD bases) selected by itself from *N*₁ candidate SD bases in the horizontal dimension via $\left⌈{log}_{2}\left(\begin{matrix}{N}_{1} \\ {L}_{h}\end{matrix}\right)\right⌉$ bits, and indicates L*ᵥ* SD basis (i.e., one or more second SD bases) selected by itself from *N*₂ candidate SD bases in the vertical dimension via $\left⌈{log}_{2}\left(\begin{matrix}{N}_{2} \\ {L}_{v}\end{matrix}\right)\right⌉ bits$.

In this case, an indication of an oversampling factor may include the following cases.

In case 1, one orthogonal SD basis group including *N*₁*N*₂ orthogonal SD bases is indicated via $\left⌈{log}_{2}\left({O}_{1}{O}_{2}\right)\right⌉$ bits. Then, the first scheme described above is used to indicate the L*ₕ* SD bases in the horizontal dimension and the L*ᵥ* SD bases in the vertical dimension.

In case 2, one orthogonal SD basis group (i.e., first orthogonal SD basis group) including *N*₁ orthogonal SD bases in the horizontal dimension and one orthogonal SD basis group (i.e., second orthogonal SD basis group) including *N*₂ SD orthogonal bases in the vertical dimension are indicated respectively via $\left⌈{log}_{2} {O}_{1}\right⌉$ bits and $\left⌈{log}_{2} {O}_{2}\right⌉$ bits.

In a second scheme, the network configures a total quantity L of one or more SD bases (i.e., a total quantity of one or more SD bases), and L = L*ₕ* · L*ᵥ*. The terminal still indicates L*ₕ* SD bases (i.e., one or more first SD bases) selected by the terminal from the *N*₁ candidate SD bases in the horizontal dimension by reporting $\left⌈{log}_{2}\left(\begin{matrix}{N}_{1} \\ {L}_{h}\end{matrix}\right)\right⌉$ bits, and indicates L*ᵥ* SD bases (i.e., one or more second SD bases) selected by the terminal from *N*₂ candidate SD bases in the vertical dimension by reporting $\left⌈{log}_{2}\left(\begin{matrix}{N}_{2} \\ {L}_{v}\end{matrix}\right)\right⌉$ bits.

In addition, the terminal also feeds back to the network device indication information of a quantity of the one or more first SD bases and indication information of a quantity of the one or more second SD bases. At this time, the quantity of the one or more first SD bases is L*ₕ* and the quantity of the one or more second SD bases is L*ᵥ*.

Therefore, indication manners for values of L*ₕ* and L*ᵥ* may include:
manner A, indicating the values of L*ₕ* and L*ᵥ* via $\left⌈{log}_{2} L\right⌉$ bits;
manner B, indicating the values of L*ₕ* and L*ᵥ* via $\left⌈{log}_{2} {N}_{1}\right⌉$ bits and $\left⌈{log}_{2} {N}_{2}\right⌉$ bits respectively;
manner C, indicating the values of L*ₕ* and L*ᵥ* via $\left⌈{log}_{2} L\right⌉$ bits or $\left⌈{log}_{2} {N}_{2}\right⌉$ bits respectively, or indicating the values of L*ₕ* and L*ᵥ* via $\left⌈{log}_{2} {N}_{1}\right⌉$ bits and $\left⌈{log}_{2} L\right⌉$ bits respectively; and
manner D, indicating the values of L*ₕ* and L*ᵥ* via predefined information lengths, such as a₁ bits and a₂ bits respectively;
In some possible embodiments, indication information of the values of L*ₕ* and L*ᵥ* described in the above manners A, B, C and D is carried in CSI Part 1 and fed back. An indication method of the oversampling factor is in the same way as the cases 1 and 2 above.

It should be noted that the indication information of the L*ₕ* SD bases in the horizontal dimension and the L*ᵥ* SD bases in the vertical dimension selected by the terminal above, and the indication information of the oversampling factor are carried in CSI Part2 and fed back.

### Embodiment 1 (the first scheme):

It is assumed that the network configures for the terminal that the quantity of the SD bases in the horizontal dimension and the quantity of the SD bases in the vertical dimension are L*ₕ* = 2 and L*ᵥ* = 2, respectively; a quantity of antenna ports in the horizontal dimension and a quantity of antenna ports in the vertical dimension are *N*₁ = 8 and *N*₂ = 4, respectively; and an oversampling factor in the horizontal dimension and an oversampling factor in the vertical dimension are *O*₁ = 4 and *O*₂ = 4, respectively. According to the Alt1 scheme described above, the terminal needs to indicate two SD bases selected from eight candidate SD bases in the horizontal dimension by reporting $\left⌈{log}_{2}\left(\begin{matrix}{N}_{1} \\ {L}_{h}\end{matrix}\right)\right⌉ = 5$ bits, and indicate two SD bases selected from four candidate SD bases in the vertical dimension by reporting $\left⌈{log}_{2}\left(\begin{matrix}{N}_{2} \\ {L}_{v}\end{matrix}\right)\right⌉ = 3$ bits. Since *O*₁ = *O*₂ = 4, the overheads for indicating the oversampling factors in case 1 and case 2 employed by the terminal are the same, i.e., $\left⌈{log}_{2}\left({O}_{1}{O}_{2}\right)\right⌉ = \left⌈{log}_{2} {O}_{1}\right⌉ + \left⌈{log}_{2} {O}_{2}\right⌉ = 4$ bits. A total feedback overhead is $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2}\left({O}_{1}{O}_{2}\right)\right⌉ = 12$ bits, thus a total indication overhead of 12 bits is carried in the CSI part 2 and reported.

However, an overhead employed by a conventional method for SD basis indication is $\left⌈{log}_{2}\left(\begin{matrix}{N}_{1} {N}_{2} \\ L\end{matrix}\right)\right⌉ + \left⌈{log}_{2}\left({O}_{1}{O}_{2}\right)\right⌉ = 22$ bits, where L= L*ₕ*L*ᵥ* =4, which is configured by the network to the terminal via an RRC signaling. It may be seen that, compared with the conventional method fir SD basis indication, employing the first scheme may save 22-12=10 bits.

### Embodiment 2 (the second scheme):

It is assumed that the condition is similar to the first scheme, and it is assumed that the network configures for the terminal that a quantity of antenna ports in the horizontal dimension and a quantity of antenna ports in the vertical dimension are *N*₁ = 8 and *N*₂ = 4, respectively, and an oversampling factor in the horizontal dimension and an oversampling factor in the vertical dimension are *O*₁ = 4 and *O*₂ = 4, respectively. The network also configures a total quantity L=4 of SD bases. The total quantity of the SD bases refers to L SD bases calculated by a Kronecker product of a quantity L*ₕ* of SD bases in the horizontal dimension and a quantity L*ᵥ* of SD bases in the vertical dimension, and L=L*ₕ*L*ᵥ*. L*ₕ* and L*ᵥ* are selected independently by the terminal based on a channel condition estimated according to a CSI-RS, and reported and indicated to the network. Based on the above manners A, B, C, and D, corresponding indication overheads for L*ₕ* and L*ᵥ* are:
manner A, $\left⌈{log}_{2} L\right⌉ + \left⌈{log}_{2} L\right⌉ = 4$ bits;
manner B, $\left⌈{log}_{2} {N}_{1}\right⌉ + \left⌈{log}_{2} {N}_{2}\right⌉ = 5$ bits;
manner C, $\left⌈{log}_{2} L\right⌉ + \left⌈{log}_{2} {N}_{2}\right⌉ = 4$ bits or $\left⌈{log}_{2} {N}_{1}\right⌉ + \left⌈{log}_{2} L\right⌉ = 5$ bits; and
manner D, indicating values of L*ₕ* and L*ᵥ* by predefined information lengths a₁ = 3 bits and a₂ = 2 bits, where a total indication overhead is 5 bits.

In a case that the terminal selects a quantity of SD bases in the horizontal dimension and a quantity of SD bases in the vertical dimension as L*ₕ* = 2 and L*ᵥ* = 2 respectively based on the channel condition estimated according to the CSI-RS. It may be seen based on Embodiment 1 that the terminal also needs to indicate the SD bases selected via an indication overhead of $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2}\left({O}_{1}{O}_{2}\right)\right⌉ = 12$ bits. It is assumed that manner A is employed to indicate L*ₕ* and L*ᵥ*, a total indication overhead is $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2}\left({O}_{1}{O}_{2}\right)\right⌉ + \left⌈{log}_{2} L\right⌉ + \left⌈{log}_{2} L\right⌉ = 16$ bits. Compared with an overhead of $\left⌈{log}_{2}\left(\begin{matrix}{N}_{1} {N}_{2} \\ L\end{matrix}\right)\right⌉ + \left⌈{log}_{2}\left({O}_{1}{O}_{2}\right)\right⌉ = 22$ bits used by the conventional method for SD basis indication, an indication overhead may still reduce 6 bits.

In some possible embodiments, the indication information of L*ₕ* and L*ᵥ* above is carried in CSI part 1 and fed back, while other indication information related to the one or more SD bases, i.e. the indication information with an overhead of $\left⌈{log}_{2}\left(\begin{matrix}{N}_{1} \\ {L}_{h}\end{matrix}\right)\right⌉ + \left⌈{log}_{2}\left(\begin{matrix}{N}_{2} \\ {L}_{v}\end{matrix}\right)\right⌉ + \left⌈{log}_{2}\left({O}_{1}{O}_{2}\right)\right⌉$ , is carried in CSI part 2 and fed back.

Embodiments of the disclosure also provide an apparatus for implementing any one of the above methods. For example, an apparatus is provided, including units or modules for implementing the steps executed by the terminal in any one of the above methods. For another example, another apparatus is provided, including units or modules for implementing steps executed by the network device (such as, an access network device) in any one of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of software called by a processor. For example, the apparatus includes a processor, which is connected to a memory for storing instructions. The processor calls the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Alternatively, the units or modules in the apparatus may be implemented in the form of a hardware circuit. Some or all of the functions of the units or modules may be implemented via a design of the hardware circuit. The hardware circuit may be understood as one or more processors. For example, in an implementation, the hardware circuit is an application-specific integrated circuit (ASIC). Functions of some or all of the units are implemented by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to implement the functions of some or all of the units or modules. All units or modules of the above apparatus may be fully implemented in the form of software called by the processor, or fully implemented in the form of the hardware circuit, or partially implemented in the form of software called by the processor and the remaining part implemented in the form of the hardware circuit.

In the embodiments of the disclosure, the processor is a circuit with a signal processing capability. In an implementation, the processor may be a circuit with a capability to read and run instructions, such as a CPU, a microprocessor, a graphics processing unit (GPU) (which may also be understood as a type of the microprocessor), a digital signal processor (DSP), etc. In another implementation, the processor may implement some functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all of the units or modules. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a block diagram illustrating a terminal according to an embodiment of the disclosure. A structure of the terminal 101 described above may be illustrated in FIG. 7A. The terminal 101 may include: a transceiver module 7101. In some possible embodiments, the above transceiver module 7101 is configured to send first information, and the first information is used to indicate at least one of one or more first SD bases in a horizontal dimension or one or more second SD bases in a vertical dimension. Alternatively, the above transceiver module 7101 is configured to execute at least one of the communication steps (e.g., steps S2110, S2120, S2130, S2140, S2210, S2220, S2230, S2240, S2250, but not limited herein) such as sending and/or receiving executed by the terminal 101 in any of the above methods, which is not repeated here.

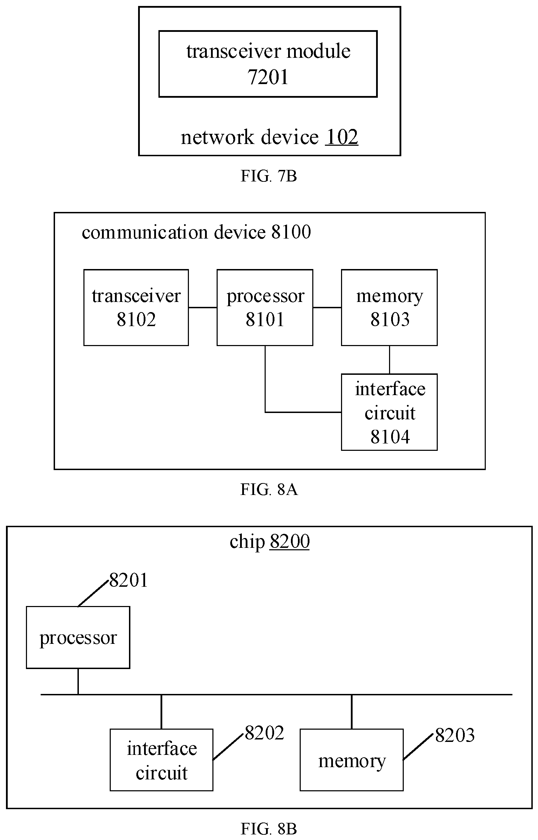

FIG. 7B is a block diagram illustrating a network device according to an embodiment of the disclosure. A structure of the network device 102 described above may be illustrated in FIG. 7B. The network device 102 may include: a transceiver module 7201. In some possible embodiments, the transceiver module 7201 is configured to receive first information, and the first information is used to indicate at least one of one or more first SD bases in a horizontal dimension or one or more second SD bases in a vertical dimension. Alternatively, the above transceiver module 7201 is configured to execute at least one of the communication steps (e.g., steps S2110, S2120, S2130, S2140, S2210, S2220, S2230, S2240, S2250, but not limited herein) such as sending and/or receiving executed by the network device 102 in any of the above methods, which is not repeated here.

In some possible embodiments, the transceiver module may include the transceiver module 7101 and/or the transceiver module 7201. The transceiver module 7101 and/or the transceiver module 7201 may be separate or integrated together. Alternatively, the transceiver module may be interchanged with a transceiver.

FIG. 8A is a block diagram illustrating a communication device according to an embodiment of the disclosure. As illustrated in FIG. 8A, the communication device 8100 may be a terminal 101 (e.g., a UE, etc.), or a network device 102 (e.g., an access network device), or a chip, a chip system, or a processor, etc., that supports the network device to implement any one of the above methods, or a chip, a chip system, or a processor, etc., that supports the terminal to implement any one of the above methods. The communication device 8100 may be used to implement the method in the above method embodiments. For details, please refe to the description in the above method embodiments.

As illustrated in FIG. 8A, the communication device 8100 may include one or more processors 8101. The processor 8101 may be a general-purpose processor or a special-purpose processor, such as a baseband processor or a central processing unit. The baseband processor may be configured to process communication protocols and communication data, and the central processing unit may be configured to control communication devices (such as base stations, baseband chips, terminals, terminal chips, DU or CU, etc.) to execute computer programs and process computer program data.

In some possible embodiments, the communication device 8100 also includes one or more transceivers 8102. When the communication device 8100 includes one or more transceivers 8102, the one or more transceivers 8102 execute at least one of the communication steps (e.g., steps S2110, S2120, S2130, S2140, S2210, S2220, S2230, S2240, S2250, but not limited herein) such as sending and/or receiving in the above method. In an alternative embodiment, the transceiver may include a receiver and/or a transmitter, which may be separate or integrated together. Alternatively, the terms such as transceiver, transceiving unit, transceiving machine, transceiving circuit, interface circuit, and interface may be used interchangeably; the terms such as transmitter, transmitting unit, transmitting machine, and transmitting circuit may be used interchangeably; and the terms such as receiver, receiving unit, receiving machine, and receiving circuit may be used interchangeably.

In some possible embodiments, the communication device 8100 also includes one or more memories 8103 for storing data. Alternatively, all or some of the memory 8103 may be located outside the communication device 8100. In an alternative embodiment, the communication device 8100 may include one or more interface circuits 8104. Alternatively, the interface circuit 8104 is connected to the memory 8103. The interface circuit 8104 may be configured to receive data from the memory 8103 or other devices, and may be configured to send data to the memory 8103 or other devices. For example, the interface circuit 8104 may read data stored in the memory 8103 and send the data to the processor 8101.

The communication device 8100 in the description of the above embodiments may be a network device or a terminal, but the scope of the communication device 8100 described in the disclosure is not limited herein, and the structure of the communication device 8100 may not be limited by FIG. 8A. The communication device may be a stand-alone device or may be part of a larger device. For example, the communication device may be: (1) a stand-alone IC, a chip, a chip system or a subsystem; (2) a collection of ICs including one or more ICs, alternatively, the collection of ICs also including storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8B is a block diagram illustrating a chip according to an embodiment of the disclosure. For the case where the communication device 8100 may be a chip or a chip system, please refer to the block diagram of the chip 8200 illustrated in FIG. 8B, which is not limited herein.

In some possible embodiments, the chip 8200 may include one or more processors 8201.

In some possible embodiments, the chip 8200 may also include one or more interface circuits 8202. Alternatively, the terms such as interface circuit, interface, and transceiver pin may be used interchangeably. In some possible embodiments, the chip 8200 also includes one or more memories 8203 for storing data. Alternatively, all or some of the memory 8203 may be located outside of the chip 8200. Alternatively, the interface circuit 8202 is connected to the memory 8203. The interface circuit 8202 may be configured to receive data from the memory 8203 or other devices, and the interface circuit 8202 may be configured to send data to the memory 8203 or other devices. For example, the interface circuit 8202 may read data stored in the memory 8203 and send the data to the processor 8201.

In some possible embodiments, the interface circuit 8202 executes at least one of the communication steps (e.g., steps S2110, S2120, S2130, S2140, S2210, S2220, S2230, S2240, S2250, but not limited herein) such as sending and/or receiving in the above method. The interface circuit 8202 executes communication steps such as sending and/or receiving in the above method, for example, the interface circuit 8202 executes data interaction between the processor 8201, the chip 8200, the memory 8203 or the transceiver device.

Embodiments of the disclosure also provide a storage medium for storing instructions. When the instructions are run on the communication device 8100, the communication device 8100 is caused to execute any one of the above methods. Alternatively, the storage medium is an electronic storage medium. Alternatively, the storage medium is a computer-readable storage medium, but it is not limited herein, and may also be a storage medium readable by other devices. Alternatively, the storage medium may be a non-transitory storage medium, but it is not limited herein, and may also be a transitory storage medium.

Embodiments of the disclosure also provide a program product. When the program product is executed by the communication device 8100, the communication device 8100 is caused to execute any one of the above methods. Alternatively, the program product is a computer program product.

Embodiments of the disclosure also provide a computer program. When the computer program is executed on a computer, the computer is caused to execute any one of the above methods.

Other embodiments of the disclosure will be apparent to those skilled in the art from consideration of the specification and practice of the disclosure disclosed here. The disclosure is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for channel status information (CSI) feedback, executed by a terminal, and comprising:
sending first information, wherein the first information is used to indicate at least one of:
one or more first spatial domain (SD) bases in a horizontal dimension; or
one or more second SD bases in a vertical dimension.

2. The method of claim 1, wherein the one or more first SD bases are indicated by a first field of the first information.

3. The method of claim 2, wherein a bit value of the first field is determined based on a quantity of antenna ports in the horizontal dimension and a quantity of the one or more first SD bases.

4. The method of claim 2 or 3, wherein a bit value of the first field is calculated based on an expression: $\left⌈{log}_{2}\left(\begin{matrix}{N}_{1} \\ {L}_{h}\end{matrix}\right)\right⌉ ,$ where *N*₁ represents a quantity of antenna ports in the horizontal dimension; and L*ₕ* represents a quantity of the one or more first SD bases.

5. The method of any one of claims 1 to 4, wherein the one or more second SD bases are indicated by a second field of the first information.

6. The method of claim 5, wherein a bit value of the second field is determined based on a quantity of antenna ports in the vertical dimension and a quantity of the one or more second SD bases.

7. The method of claim 5 or 6, wherein a bit value of the second field is calculated based on an expression: $\left⌈{log}_{2}\left(\begin{matrix}{N}_{2} \\ {L}_{v}\end{matrix}\right)\right⌉ ;$ where *N*₂ represents a quantity of antenna ports in the vertical dimension; and L*ᵥ* represents a quantity of the one or more second SD bases.

8. The method of any one of claims 1 to 7, further comprising:
sending second information, wherein the second information is used to indicate at least one of:
a first orthogonal SD basis group in the horizontal dimension; or
a second orthogonal SD basis group in the vertical dimension.

9. The method of any one of claims 1 to 8, further comprising:
receiving third information, wherein the third information is used to indicate a quantity of one or more SD bases, and the quantity of the one or more SD bases is used to determine at least one of the one or more first SD bases or the one or more second SD bases.

10. The method of claim 9, wherein the quantity of the one or more SD bases comprises at least one of:
a quantity of one or more SD bases in the horizontal dimension; or
a quantity of one or more SD bases in the vertical dimension.

11. The method of claim 9, wherein the quantity of the one or more SD bases comprises a total quantity of the one or more SD bases, and the total quantity of the one or more SD bases is equal to a product of a quantity of one or more SD bases in the horizontal dimension and a quantity of one or more SD bases in the vertical dimension.

12. The method of claim 11, further comprising:
sending fourth information, wherein the fourth information is used to indicate at least one of:
the quantity of the one or more first SD bases; or
the quantity of the one or more second SD bases.

13. The method of claim 12, wherein the quantity of the one or more first SD bases is indicated by a third field of the fourth information.

14. The method of claim 13, wherein a bit value of the third field is determined by at least one of:
the quantity of the one or more SD bases;
the quantity of antenna ports in the horizontal dimension; or
a first preset value.

15. The method of claim 12, wherein the quantity of the one or more second SD bases is indicated by a fourth field of the fourth information.

16. The method of claim 15, wherein a bit value of the fourth field is determined by at least one of:
the quantity of the one or more SD bases;
the quantity of antenna ports in the vertical dimension; or
a second preset value.

17. The method of any one of claims 9 to 16, further comprising:
receiving fifth information, wherein the fifth information comprises at least one of:
the quantity of antenna ports in the horizontal dimension;
the quantity of antenna ports in the vertical dimension;
an oversampling factor in the horizontal dimension; or
an oversampling factor in the vertical dimension.

18. A method for channel status information (CSI) feedback, executed by a network device, and comprising:
receiving first information, wherein the first information is used to indicate at least one of:
one or more first spatial domain (SD) bases in a horizontal dimension; or
one or more second SD bases in a vertical dimension.

19. The method of claim 18, wherein the one or more first SD bases are indicated by a first field of the first information.

20. The method of claim 19, wherein a bit value of the first field is determined based on a quantity of antenna ports in the horizontal dimension and a quantity of the one or more first SD bases.

21. The method of claim 19 or 20, wherein a bit value of the first field is calculated based on an expression: $\left⌈{log}_{2}\left(\begin{matrix}{N}_{1} \\ {L}_{h}\end{matrix}\right)\right⌉ ,$ where *N*₁ represents a quantity of antenna ports in the horizontal dimension; and L*ₕ* represents a quantity of the one or more first SD bases.

22. The method of any one of claims 18 to 21, wherein the one or more second SD bases are indicated by a second field of the first information.

23. The method of claim 22, wherein a bit value of the second field is determined based on a quantity of antenna ports in the vertical dimension and a quantity of the one or more second SD bases.

24. The method of claim 22 or 23, wherein a bit value of the second field is calculated based on an expression: $\left⌈{log}_{2}\left(\begin{matrix}{N}_{2} \\ {L}_{h}\end{matrix}\right)\right⌉ ,$ where *N*₂ represents a quantity of antenna ports in the horizontal dimension; and L*ᵥ* represents a quantity of the one or more second SD bases.

25. The method of any one of claims 18 to 24, further comprising:
receiving second information, wherein the second information is used to indicate at least one of:
a first orthogonal SD basis group in the horizontal dimension; or
a second orthogonal SD basis group in the vertical dimension.

26. The method of any one of claims 18 to 25, further comprising:
sending third information, wherein the third information is used to indicate a quantity of one or more SD bases, and the quantity of the one or more SD bases is used to determine at least one of the one or more first SD bases or the one or more second SD bases.

27. The method of claim 26, wherein the quantity of the one or more SD bases comprises at least one of:
a quantity of one or more SD bases in the horizontal dimension; or
a quantity of one or more SD bases in the vertical dimension.

28. The method of claim 26, wherein the quantity of the one or more SD bases comprises a total quantity of the one or more SD bases, and the total quantity of SD bases is equal to a product of a quantity of one or more SD bases in the horizontal dimension and a quantity of one or more SD bases in the vertical dimension.

29. The method of claim 28, further comprising:
receiving fourth information, wherein the fourth information is used to indicate at least one of:
the quantity of the one or more first SD bases; or
the quantity of the one or more second SD bases.

30. The method of claim 29, wherein the quantity of the one or more first SD bases is indicated by a third field of the fourth information.

31. The method of claim 30, wherein a bit value of the third field is determined by at least one of:
the quantity of the one or more SD bases;
the quantity of antenna ports in the horizontal dimension; or
a first preset value.

32. The method of claim 29, wherein the quantity of the one or more second SD bases is indicated by a fourth field of the fourth information.

33. The method of claim 32, wherein a bit value of the fourth field is determined by at least one of:
the quantity of the one or more SD bases;
the quantity of antenna ports in the vertical dimension; or
a second preset value.

34. The method of any one of claims 26 to 33, further comprising:
sending fifth information, wherein the fifth information comprises at least one of:
the quantity of antenna ports in the horizontal dimension;
the quantity of antenna ports in the vertical dimension;
an oversampling factor in the horizontal dimension; or
an oversampling factor in the vertical dimension.

35. A terminal, comprising:
a transceiver module, configured to send first information, wherein the first information is used to indicate at least one of:
one or more first spatial domain (SD) bases in a horizontal dimension; or
one or more second SD bases in a vertical dimension.

36. A network device, comprising:
a transceiver module, configured to receive first information, wherein the first information is used to indicate at least one of:
one or more first spatial domain (SD) bases in a horizontal dimension; or
one or more second SD bases in a vertical dimension.

37. A communication device, comprising:
one or more processors; and
one or more memories for storing instructions;
wherein the one or more processors are configured to call the instructions to cause the communication device to execute the method of any one of claims 1 to 17, or 18 to 34.

38. A communication system, comprising: a terminal and a network device;
wherein the terminal is configured to execute the method of any one of claims 1 to 17; and
the network device is configured to execute the method of any one of claims 18 to 34.

39. A storage medium for storing instructions, wherein when the instructions are executed by a processor, the method of any one of claims 1 to 17, or 18 to 34 is executed.
